# EUROPEAN PATENT APPLICATION

(11) **EP 4 787 559 A2**
(43) Date of publication of application: **05.08.2026**
(21) Application number: 25221635.3
(22) Date of filing: 09.12.2025
(51) Int. Cl.: H01M 50/119, H01M 50/533, H01M 50/534, H01M 50/536, H01M 50/571, H01M 50/586, H01M 50/59

(54) **BATTERY AND ELECTRICAL DEVICE**

(30) Priority: 09.12.2024 CN 202411803030; 20.02.2025 WO PCT/CN2025/078298
(71) Applicant: HUIZHOU EVE POWER CO., LTD, Huizhou, Guangdong 516039 (CN); Eve Power Co., Ltd., Jingmen, Hubei 448000 (CN)
(72) Inventor: Liu, Rongwei, Guangdong, 516039 (CN); Chen, Pandong, Guangdong, 516039 (CN); Li, Renbing, Guangdong, 516039 (CN); Yan, Bo, Guangdong, 516039 (CN); He, Wei, Guangdong, 516039 (CN)
(74) Representative: Berggren Oy

(57) **Abstract**

The invention provides a battery and an electrical device. The battery includes a connection member and a package member, where the connection member (2) has an electrode lead-out portion (201) for connecting an electrode of the battery and a tab connection portion (202) for connecting a tab of the battery; and where at least a partial structure of the package portion (3) is provided at the connection between the electrode lead-out portion (201) and the tab connection portion (202) and/or the connection between the electrode lead-out portion (201) and an electrode of the battery. The battery of the invention improves the connection stability of between the tab of the battery and the electrode of the battery.

## Description

### TECHNICAL FIELD

The invention relates to the field of battery technologies, and more particular to a battery and an electrical device.

### BACKGROUND

A battery is widely used in energy storage systems, vehicles, and consumer electronics or the like. A tab of the battery and an electrode of the battery need to be connected together by a connection structure.

**In** the related art, the stability of the connection between the tab of the battery and the electrode of the battery has yet to be improved.

### SUMMARY

The stability of connection between an electrode of the battery and a tab of the battery is to be improved.

**In** a first aspect, the embodiments of the invention provide a battery, including: a connection member and a package portion, where the connection member has an electrode lead-out portion for connecting an electrode of the battery and a tab connection portion for connecting a tab of the battery;

where at least a partial structure of the package portion is provided at the connection between the electrode lead-out portion and the tab connection portion, and/or the connection between the electrode lead-out portion and the electrode of the battery.

**In** a second aspect, the embodiments of the invention provide an electrical device, including any of the batteries described above.

### BENEFICIAL EFFECT

**In** the embodiments of the present invention, by providing the package portion at the connection between the electrode lead-out portion and the tab connection portion, the package portion can prevent an impurity from entering the connection between the electrode lead-out portion and the tab connection portion, thereby preventing the impurity from affecting a connection strength between the electrode lead-out portion and the tab connection portion, improving a connection stability between the electrode lead-out portion and the tab connection portion, improving a structural stability of the connection member, and further improving a connection stability between the tab of the battery and the electrode of the battery. By providing the package portion at the connection between the electrode lead-out portion and the electrode, the package portion prevents the impurity from entering the connection between the electrode lead-out portion and the electrode, thereby preventing the impurity from affecting a connection strength between the electrode lead-out portion and the electrode, improving a connection stability between the electrode lead-out portion and the electrode, and further improving a connection stability between the electrode tab of the battery and the electrode of the battery.

### DESCRIPTION OF THE DRAWINGS

FIG. 1 is a first schematic structural diagram of a battery according to some embodiments of the invention.
FIG. 2 is a first schematic diagram of a partial structure of a battery according to some embodiments of the invention.
FIG. 3 is a schematic structural diagram of the structure of FIG. 2 after molding according to some embodiments of the invention.
FIG. 4 is a second schematic structural diagram of a battery according to some embodiments of the invention.
FIG. 5 is a second schematic diagram of a partial structure of a battery according to some embodiments of the invention.
FIG. 6 is a schematic structural diagram of the structure of FIG. 5 after molding according to some embodiments of the invention.
FIG. 7 is a third schematic diagram of a partial structure of a battery according to some embodiments of the invention.
FIG. 8 is a schematic structural diagram of the structure of FIG. 7 after molding according to some embodiments of the invention.
FIG. 9 is a fourth schematic diagram of a partial structure of a battery according to some embodiments of the invention.
FIG. 10 is a schematic structural diagram of the structure of FIG. 9 after molding according to some embodiments of the invention.
FIG. 11 is a fifth schematic diagram of a partial structure of a battery according to some embodiments of the invention.
FIG. 12 is a sixth schematic diagram of a partial structure of a battery according to some embodiments of the invention.
FIG. 13 is a schematic structural diagram of the structure of FIG. 12 after molding according to some embodiments of the invention.
FIG. 14 is a first schematic diagram of a partial structure of a battery provided with a mounting bracket according to some embodiments of the invention.
FIG. 15 is a second schematic diagram of a partial structure of a battery provided with a mounting bracket according to some embodiments of the invention.
FIG. 16 is a first schematic structural diagram of a tab connection portion according to some embodiments of the invention.
FIG. 17 is a second schematic structural diagram of a tab connection portion according to some embodiments of the invention.
FIG. 18 is a schematic structural diagram of a package portion according to some embodiments of the invention.

### DETAILED DESCRIPTION

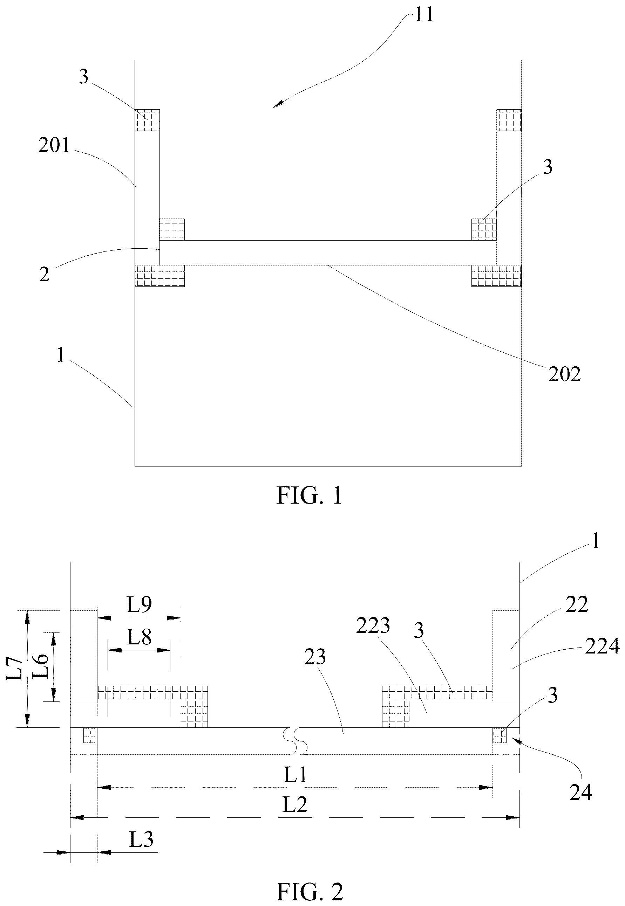

According to some embodiments of the invention, it is provided a battery. Referring to FIG. 1, the battery includes a connection member 2 and a package portion 3, where the connection member 2 has an electrode lead-out portion 201 for connecting an electrode of the battery and a tab connection portion 202 for connecting a tab of the battery.

At least a partial structure of the package portion 3 is provided at the connection between the electrode lead-out portion 201 and the tab connection portion 202, and/or the connection between the electrode lead-out portion 201 and the electrode of the battery.

According to the battery provided in the embodiments of the invention, by providing the package portion 3 at the connection between the electrode lead-out portion 201 and the tab connection portion 202, the package portion 3 can prevent an impurity from entering the connection between the electrode lead-out portion 201 and the tab connection portion 202, thereby preventing the impurity from affecting a connection strength between the electrode lead-out portion 201 and the tab connection portion 202, improving a connection stability between the electrode lead-out portion 201 and the tab connection portion 202, improving a structural stability of the connection member 2, and further improving a connection stability between the tab of the battery and the electrode of the battery. By providing the package portion 3 at the connection between the electrode lead-out portion 201 and the electrode, the package portion 3 prevents the impurity from entering the connection between the electrode lead-out portion 201 and the electrode, thereby preventing the impurity from affecting a connection strength between the electrode lead-out portion 201 and the electrode, improving a connection stability between the electrode lead-out portion 201 and the electrode, and further improving a connection stability between the electrode tab of the battery and the electrode of the battery.

In some embodiments, the electrode of the battery includes a battery housing or a battery post.

It should be understood that, when the electrode of the battery is the battery housing, the electrode lead-out portion 201 is connected to the battery housing, that is, the connector 2 is connected to the battery housing and the tab of the battery. When the electrode of the battery is the battery post, the electrode lead-out portion 201 is connected to the battery post, that is, the connection member 2 is connected to the battery post and the tab of the battery.

In some examples, the impurity is, for example, an electrolyte.

In some embodiments, the connection member 2 includes an electrode connection member 22 having the electrode lead-out portion 201 and a tab connection member 23 having the tab connection portion 202, which are connected in sequence.

It should be understood that the electrode connection member 22 may be connected to the electrode of the battery, and the tab connection member 23 may be connected to the tab of the battery, thereby connecting the electrode of the battery with the tab of the battery together.

In some examples, the electrode connection member 22 has an electrode lead-out portion 201, which may refer to a partial structure of the electrode connection member 22 as the electrode lead-out portion 201 or an overall structure of the electrode connection member 22 as the electrode lead-out portion 201.

In some examples, the tab connection member 23 has a tab connection portion 202, which may refer to a partial structure of the tab connection member 23 as the tab connection portion 202 or an overall structure of the tab connection member 23 as the tab connection portion 202.

In some examples, the package portion 3 is provided at at least a portion of the connection member 2, may be provided at a bending portion of the connector 2, may be provided at an entire connector 2, or may be provided at an end portion of the connection member 2 connected to the housing 1.

In some examples, at least a partial structure of the package portion 3 is provided at the connection between the connection member 2 and the housing 1, which may mean that a portion of the package portion 3 is provided at the connection between the connection member 2 and the housing 1 and another portion of the package portion 3 is provided at another position of the connection member 2.

In some examples, at least a partial structure of the package portion 3 is provided at the connection between the connection member 2 and the housing 1, which may mean that the package portion 3 may be provided at a peripheral side of the connection between the connection member 2 and the housing 1 or may be covered by the connection between the connection member 2 and the housing 1.

In some examples, the package portion 3 is, for example, a package glue, wherein a material of the package glue is a polyurethane type, an epoxy type, an anaerobic glue, a Ultraviolet Rays (UV) glue, an acrylic type, a hot melt glue, and the like, and the elastic modulus of the package glue is between 0.1 Gpa and 6 Gpa.

The package portion 3 is provided at the connection between the electrode connection member 22 and the electrode of the battery.

It should be understood that, by providing the package portion 3 at the connection between the electrode connection member 22 and the electrode of the battery, the package portion 3 can prevent the connection between the electrode connection member 22 and the electrode of the battery from contacting other substances, so that the connection strength between the electrode connection member 22 and the electrode of the battery is prevented from being affected by other substances, the connection strength between the electrode connection member 22 and the electrode is ensured, and the connection stability between the electrode connection member 22 and the electrode is improved. Further, the connection member 2 can stably connect the electrode and the tab, thereby improving the connection stability between the electrode and the tab.

The package portion 3 is provided at the connection between the electrode connection member 22 and the tab connection member 23.

It should be understood that, by providing the package portion 3 at the connection between the electrode connection member 22 and the tab connection member 23, the package portion 3 can prevent the connection between the electrode connection member 22 and the tab connection member 23 from contacting other substances, so that the connection strength between the electrode connection member 22 and the tab connection member 23 is prevented from being affected by other substances, the connection strength between the electrode connection member 22 and the tab connection member 23 is ensured, and the structure stability of the connection member 22 and the electrode is improved. Further, the connection member 2 can stably connect the electrode and the tab of the battery, thereby improving the connection stability between the electrode and the tab of the battery.

The electrode connection member 22 and the tab connection member 23 are in contact with the package portion 3 at the same time.

It should be understood that, at the connection between the electrode connection member 22 and the tab connection member 23, a portion of the package portion 3 is in contact with the electrode connection member 22, and another portion of the package portion 3 is in contact with the tab connection member 23, so that it is ensured that the package portion 3 can effectively package the connection between the electrode connection member 22 and the tab connection member 23, thereby effectively preventing an impurity from entering the connection between the electrode connection member 22 and the tab connection member 23, and improving the connection stability between the electrode connection member 22 and the tab connection member 23.

Illustratively, the package portion 3 has at least two connection surfaces, where at the connection between the electrode connection member 22 and the tab connection member 23, one of the connection surfaces of the package portion 3 is in contact with the electrode connection member 22 and another one of the connection surfaces of the package portion 3 is in contact with the tab connection member 23.

The electrode connection member 22 and the electrode of the battery are in contact with the package portion 3 at the same time.

It should be understood that, at the connection between the electrode connection member 22 and the electrode of the battery, a portion of the package portion 3 is in contact with the electrode connection member 22, and another portion of the package portion 3 is in contact with the electrode, so that it is ensured that the package portion 3 can effectively package the connection between the electrode connection member 22 and the electrode, thereby effectively preventing an impurity from entering the connection between the electrode connection member 22 and the electrode, and improving the connection stability between the electrode connection member 22 and the electrode.

Illustratively, the package portion 3 has at least two connection surfaces, where at the connection between the electrode connection member 22 and the electrode, one of the connection surfaces of the package portion 3 is in contact with the electrode connection member 22 and another one of the connection surfaces of the package portion 3 is in contact with the electrode.

In some embodiments, the battery includes a housing 1, and the package portion 3 is provided at the connection between the electrode connection member 22 and the housing 1.

It should be understood that the package portion 3 can prevent an impurity from entering the connection between the electrode connection member 22 and the housing 1, thereby preventing the impurity from affecting the connection strength between the electrode connection member 22 and the housing 1.

The package portion extends to a side wall surface of the housing and abuts against the side wall surface of the housing, so that the package portion can effectively package the connection between the electrode connection member 22 and the housing 1, thereby preventing an impurity from entering the connection between the electrode connection member 22 and the housing 1.

**In** some embodiments, the tab connection member 23 is spaced apart from the housing 1 at intervals.

It should be understood that the tab connection 23 is spaced apart from the housing 1 at intervals, so that the tab connection member 23 does not directly contact the housing 1, thereby reducing a connection point between the connection member 2 and the housing 1, and avoiding problems such as corrosion caused by the contact between the tab connection member 23 and the housing 1.

In some examples, the electrode connection member 22 is connected to the tab connection member 23 by a surface chemical treatment, such as electroplating, chemical plating, spraying. It is also possible to connect the electrode connection member 22 with the tab connection member 23 by a surface physical treatment, such as composite metal stamping.

In some examples, the tab connection member 23 and the electrode connection member 22 may be connected together by welding, cold heading, thermal compounding, interfacing, riveting, heat shrinkable tubes, and the like. The electrode connection member 22 and the housing 1 may be connected by laser welding, spot welding, resistance welding, or the like.

In some examples, the tab connection member 23 includes a first contact surface in contact with the electrode connection member 22, and the electrode connection member 22 includes a second contact surface in contact with the tab connection member 23, where the first contact surface and/or the second contact surface are provided with a projection/groove/roughness surface/embossing structure to increase a contact area between the tab connection member 23 and the electrode connection member 22.

In some examples, the tab connection member 23 is made of, for example, copper, and the electrode connection member 22 is made of, for example, nickel plated steel strip, nickel strip, or stainless steel.

In some embodiments, one of the housing 1, the electrode lead-out portion 201, and the tab connection portion 202 of the battery is a first metal member, and other two ones of the housing 1, the electrode lead-out portion 201, and the tab connection portion 202 of the battery are second metal members, where the first metal member and the second metal members are made of different metal materials, and the package portion 3 is provided at the connection between the first metal member and the second metal members. The first metal member is made of a first metal material, and the second metal member is made of a second metal material, where the first metal material is different from the second metal material.

It should be understood that, by providing the package portion 3 at the connection between the first metal member and the second metal member, i.e. at a contact position where different metal materials are in contact with each other, the package portion 3 can prevent the connection between the first metal member and the second metal member from contacting other substances, such as electrolyte, so that the connection between the first metal member and the second metal member is not easily corroded. Further, the structure stability of the connection between the connection member 2 and the housing 1 is improved, so that the connection member 2 can stably connect the housing 1 and the tab.

It should be understood that two different metal materials are included in the housing 1, the electrode lead-out portion 201, and the tab connecting portion 202, so that the connection stability between the connection portion 21 and the housing 1 can be effectively ensured.

Illustratively, the first metal member has a first metal material, and the second metal member has a second metal material, where the first metal material is different from the second metal material.

It should be noted that the metal material includes a plurality of metal atoms, the two metal materials each include two groups of metal atoms, respectively, and two metal materials may be considered to be different metal materials as long as one metal atom in one group of the two groups of the two metal materials is different from a metal atom in another group. That is, when metal atoms of the first metal material are not identical to those of the second metal material, i.e., there is at least one different metal atom in the first metal material and the second metal material, it can be considered that the first metal material is different from the second metal material.

The metal material may be a pure metal, may be an alloy, or may be a metal-based composite material incorporating one or more insoluble solid particles.

The metal material may be a multilayer structure. For example, the metal material may include a substrate and a metal layer provided on the substrate, and the metal layer may be formed on the substrate by electroplating, Chemical Vapor Deposition (CVD), or the like. The metal layer may be a pure metal or an alloy, or may be a metal-based composite material incorporating one or more insoluble solid particles.

Each of the electrode lead-out portion 201 and the tab connection portion 202 is the second metal member, the housing 1 is the first metal member, and the package portion 3 is provided at the connection between the electrode lead-out portion 201 and the housing 1.

It should be understood that, the metal materials of the electrode lead-out portion 201 and the housing 1 are different from each other, and by providing the package portion 3 at the connection between the electrode lead-out portion 201 and the housing 1, the package portion 3 can prevent the connection between the electrode lead-out portion 201 and the housing 1 from contacting other substances, so that the connection between the electrode lead-out portion 201 and the housing 1, that is, the connection between the different metal materials, is not easily corroded, thereby improving the connection stability between the electrode lead-out portion 201 and the housing 1, and enabling the connection member 2 to stably connect the housing 1 and the tab.

Each of the electrode lead-out portion 201 and the housing 1 is the second metal member, the tab connection portion 202 is the first metal member, and the package portion 3 is provided at the connection between the electrode lead-out portion 201 and the tab connection portion 202.

It should be understood that, the metal materials of the electrode lead-out portion 201 and the tab connection portion 1 are different from each other, and by providing the package portion 3 at the connection between the electrode lead-out portion 201 and the tab connection member 202, the package portion 3 can prevent the connection between the electrode lead-out portion 201 and the tab connection member 202 from contacting other substances, so that the connection between the electrode lead-out portion 201 and the tab connection member 202, that is, the connection between the different metal materials, is not easily corroded, thereby improving the connection strength between the electrode lead-out portion 201 and the tab connection member 202, improving the structure stability of the connection member 2, and enabling the connection member 2 to stably connect the housing 1 and the tab.

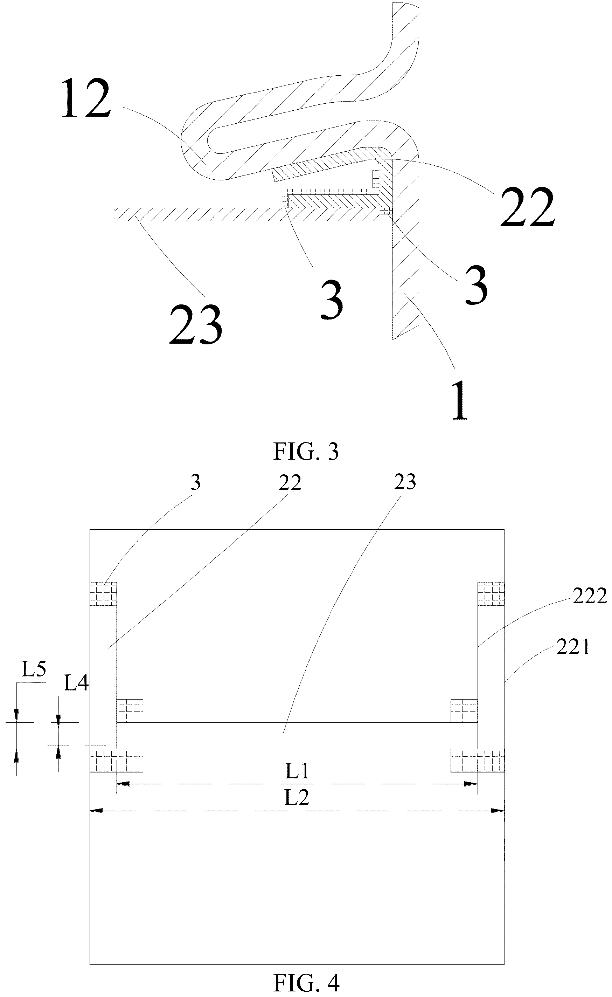

In some embodiments, referring to FIGS. 2 and 4, along a radial direction of the housing 1, the tab connection member 23 has a length L1 and the housing 1 has a diameter L2, where a ratio of L1 to L2 is between 0.01 and 0.99.

It should be understood that, when the ratio of the length of the tab connection member 23 to the diameter of the housing 1 is less than 0.01, the length of the tab connection member 23 is too short to facilitate connection of the tab connection member 23 to the tab and to facilitate connection of the tab connection member 23 to the electrode connection member 22; and when the ratio of the length of the tab connection member 23 to the diameter of the housing 1 is greater than 0.99, the distance between the tab connection member 23 and the housing 1 is smaller, and the tab connection member 23 is easily contacted with the housing 1. Therefore, in the invention, the ratio of the length of the tab connection member 23 to the diameter of the housing 1 is set between 0.01 and 0.99 to ensure the connection of both the tab and the electrode connection member 22 to the tab connection member 23, while a sufficient gap may be left between the tab connection member 23 and the housing 1 to prevent direct contact between the tab connection member 23 and the housing 1 and to prevent corrosion of the tab connection member 23 when the tab connection member 23 being in contact with the housing 1.

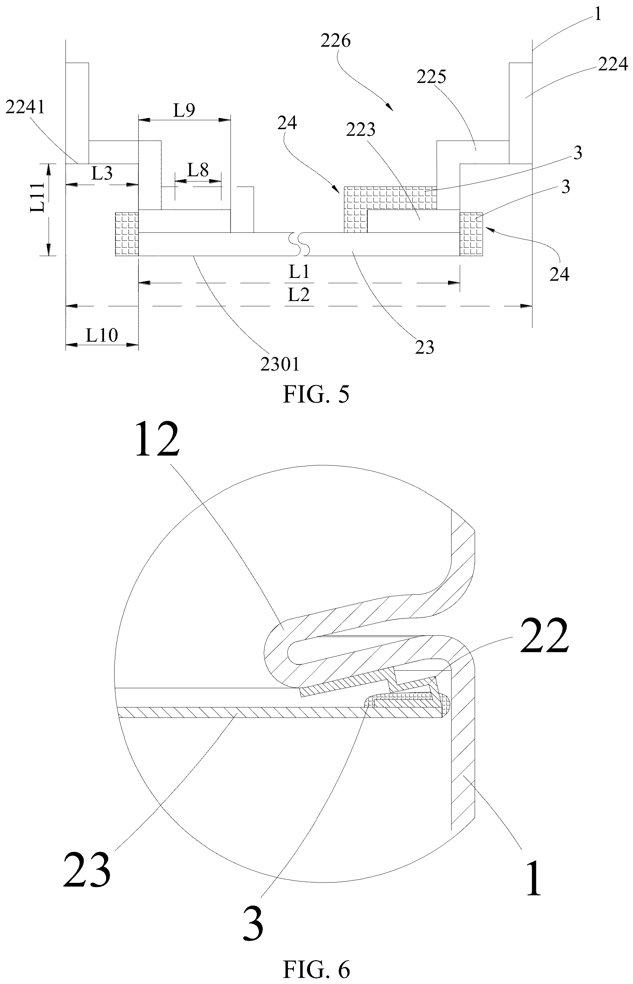

In some embodiments, referring to FIGS. 2 and 5, along the radial direction of the housing 1, a distance between the tab connection member 23 and the housing 1 is L3, where L1+2L3≤L2.

It should be understood that the distance L3 is provided between the tab connection member 23 and the housing 1, so that the tab connection member 23 is spaced apart from the housing 1 at intervals to avoid direct contact of the tab connection member 23 with the housing 1.

When L1+2L3>L2, it is illustrated in this case that the length of the connection member 2 is greater than the diameter of the housing 1 along the radial direction of the housing 1. When the battery is produced, the housing 1 may be deformed or the connection member 2 may be broken, which affects the quality of the battery. Therefore, in the invention, the sum of L1+2L3 is set to be less than or equal to L2, so that no interference occurs between the connection member 2 and the housing 1, thereby ensuring the quality of the battery.

Along the radial direction of the housing 1, both ends of the tab connection member 23 are connected with the electrode connection member 22. To avoid direct contact of the tab connection member 23 with the housing 1, at least a portion of the electrode connection member 22 may be protruded from the tab connection 23, that is, at least a portion of the electrode connection member 22 is located between the tab connection member 23 and the inner wall surface of the housing 1.

In some embodiments, referring to FIG. 4, the electrode connection member 22 includes oppositely disposed first and second side surfaces 221, 222, where the first side surface 221 is connected to the housing 1 and the tab connection member 23 disposed at the second side surface 222.

It should be understood that one side of the electrode connection member 22 is connected to the housing 1 and another side is connected to the tab connection member 23, so that the electrode connection member 22 and the tab connection member 23 can connect the housing 1 with the tab.

The tab connection member 23 is connected to one side of the electrode connection member 22 away from the housing 1, so that the tab connection member 23 can be prevented from being in direct contact with the housing 1 to prevent corrosion of the connection between the tab connection member 23 and the housing 1.

In some embodiments, referring to FIG. 4, along an axial direction of the housing 1, a fixed connection portion between the tab connection 23 and the second side surface 222 has a height L4, and a contact portion between the tab connection portion 23 and the second side surface 222 has a height L5, where L4≤L5.

It should be understood that the tab connection member 23 is connected to the second side surface 222 of the electrode connection member 22, so that the tab connection member 23 at least partially overlaps the second side surface 222 in the radial direction of the housing 1.

If L4>L5, the height of the fixed connection portion between the tab connection member 23 and the second side surface 222 is greater than that of the contact portion between the tab connection member 23 and the second side surface 222, and the fixed connection portion is protruded from the contact portion, which is not conducive to the connection of the tab connection member 23 to the electrode connection member 22, while the height required for the package portion 3 to cover the fixed connection portion also needs to be increased, which is not conducive to the package portion 3 to package the connection between the electrode connection member 22 and the tab connection member 23. Therefore, in the invention, L4 is set to be less than or equal to L5 to facilitate the connection of the electrode connection member 22 to the tab connection member 23, while it is also possible to avoid that the fixed connection portion is protruded from the contact portion, thereby facilitating the arrangement of the package portion 3.

It should be understood that the tab connection member 23 includes an end surface connected to the second side surface 222, and a portion of the tab connection member 23 fixedly connected to the second side surface 222 is the fixed connection portion. When L4 is less than L5, it is illustrated that the end surface has a portion that is not fixedly connected to the second side surface 222, that is, is only abutted against or spaced apart from the second side 222 at intervals.

In some examples, the electrode connection member 22 and the tab connection member 23 are fixedly connected to each other by welding, and the fixed connection portion between the tab connection member 23 and the second side surface 222 refers to a welding portion between the tab connection member 23 and the second side surface 222.

In some embodiments, referring to FIG. 2, along the axial direction of the housing 1, a fixed connection portion between the electrode connection member 22 and the housing 1 has a height L6, and a contact portion between the electrode connection portion 22 and the housing 1 has a height L7, where 0<L6≤L7≤15 mm.

It should be understood, If L6>L7, the height of the fixed connection portion between the electrode connection member 22 and the housing 1 may be greater than that of the contact portion between the electrode connection member 23 and the housing 1, and the fixed connection portion may be protruded from the contact portion, which is not conducive to the connection of the electrode connection member 22 to the housing 1, while the height required for the package portion 3 to cover the fixed connection portion also needs to be increased, which is not conducive to the package portion 3 to package the connection between the electrode connection member 22 and the housing 1. Therefore, in the invention, L6 is set to be less than or equal to L7 to facilitate the connection of the electrode connection member 22 to the housing 1, while it is also possible to avoid that the fixed connection portion is protruded from the contact portion, thereby facilitating the arrangement of the package portion 3.

When L6 is greater than zero, the fixed connection between the electrode connection member 22 and the housing 1 is ensured. When L7 is less than or equal to 15 mm, a larger influence on the size of the battery can be avoided.

It should be understood that the electrode connection member 22 includes a surface connected to the housing 1, and a portion of the electrode connection member 22 fixedly connected to the housing 1 is the fixed connection portion. When L6 is less than L7, it is illustrated that the side surface has a portion that is not fixedly connected to the housing 1, that is, is only abutted against or spaced apart from the housing 1 at intervals.

In some examples, the electrode connection member 22 and the housing 1 are fixedly connected to each other by welding, and the fixed connection portion between the housing 1 and the electrode connection member 22 refers to a welding portion between the housing 1 and the electrode connection member 22.

In some embodiments, a thickness of the electrode connection member 22 is between 0.05 mm and 2 mm.

It should be understood that, when the thickness of the electrode connection member 22 is less than 0.05 mm, the structure strength of the electrode connection member 22 is low and easily damaged; and when the thickness of the electrode connection member 22 is greater than 2 mm, the thickness of the electrode connection member 22 is excessively larger, which easily causes an overall thickness of the connection member 2 to be large, thereby affecting the size of the battery. Therefore, in the invention, the thickness of the electrode connection member 22 is set between 0.05 mm and 2 mm, so that the structure strength of the electrode connection member 22 is ensured, while the influence on the overall thickness of the connection member 2 and the size of the battery can be avoided.

In some embodiments, a thickness of the tab connection member 23 is between 0.05 mm and 2 mm.

It should be understood that, when the thickness of the tab connection member 23 is less than 0.05 mm, the structure strength of the tab connection member 23 is low and easily damaged; and when the thickness of the tab connection member 23 is greater than 2 mm, the thickness of the tab connection member 23 is excessively larger, which easily affects a height of the battery. Therefore, in the invention, the thickness of the tab connection member 23 is set between 0.05 mm and 2 mm, so that the structure strength of the tab connection member 23 is ensured, while the influence on the height of the battery can be further avoided.

In some embodiments, a thickness of the housing 1 is between 0.2 mm and 1 mm.

It should be understood that, when the thickness of the housing 1 is less than 0.05 mm, the structure strength of the housing 1 is low and easily damaged; and when the thickness of the housing 1 is greater than 2 mm, the thickness of the housing 1 is excessively larger, which easily affects the size of the battery. Therefore, in the invention, the thickness of the housing 1 is set between 0.05 mm and 2 mm, so that the structure strength of the housing 1 is ensured, while the influence on the size of the battery can be avoided.

In some embodiments, a hardness of the tab connection member 23 is between HV 50 and HV 120; and/or the tab connection member 23 has a tensile strength greater than 180Mpa; and/or, an impedance of the tab connection member 23 is less than 2 mΩ, thereby ensuring the performance of the tab connection member 23.

In some embodiments, a hardness of the electrode connection member 22 is between HV 50 and HV 120; and/or the electrode connection member 22 has a tensile strength greater than 180Mpa; and/or, an impedance of the electrode connection member 22 is less than 2 mΩ, thereby ensuring the performance of the electrode connection member 22.

In some embodiments, a hardness of the housing 1 is between HV 80 and HV 200; and/or a tensile strength of the housing 1 is between 240Mpa and 600Mpa; and/or, an impedance of the housing 1 is less than 2 mΩ, thereby ensuring the performance of the housing 1.

It should be understood that HV is a Vickers hardness.

**In** some embodiments, referring to FIGS. 2 and 5, a first end of the electrode connection member 22 is connected to the tab connection member 23, a second end of the electrode connection member 22 is protruded from the tab connection member 23, and an accommodating space 24 is formed between the second end of the electrode connection member 22 and the tab connection member 23 and/or between the first end of the electrode connection member 22 and the tab connection member 23 and used to accommodate the package portion 3.

It should be understood that the accommodating space 24 may be formed between the first end of the electrode connection member 22 and the tab connection member 23, or may be formed between the second end of the electrode connection member 22 and the tab connection member 23. The accommodating space 24 can accommodate the package portion 3, so that the package portion 3 is disposed between the electrode connection member 22 and the tab connection member 23 and prevents an impurity from entering the connection member 2.

It should be understood that the first end of the electrode connection member 22 is connected to the tab connection member 23, and there is a connection position between the first end of the electrode connection member 22 and the tab connection member 23, so that the accommodating space 24 for accommodating the package portion 3 may be provided between the first end of the electrode connection member 22 and the tab connection member 23 to use the package portion 3 to prevent corrosion of the connection between the electrode connection member 22 and the tab connection member 23. The second end of the electrode connection member 22 is protruded from the tab connection member 23, that is, the structure of the connection member 2 is bent at a contact position between the second end of the electrode connection member 22 and the tab connection member 23, so that the accommodating space 24 for accommodating the package portion 3 can be formed between the second end of the electrode connection member 22 and the tab connection member 23 to use the package portion 3 to prevent an impurity from entering the connection member 2.

In some embodiments, referring to FIGS. 2 and 5, a portion of the electrode connection member 22 is stacked on one side of the tab connection member 23.

It should be understood that a portion of the electrode connection member 22 is stacked on one side of the tab connection member 23, so that a space is formed between another portion of the electrode connection member 22 and the tab connection member 23 and the another portion of the electrode connection member 22 may be bent toward the tab connection member 23, thereby facilitating bending molding of the connection member 2.

In some examples, the another portion of the electrode connection member 22 is connected to an inward retracted portion 12 of the housing 1, and the inward retracted portion 12 of the housing 1 may be protruded toward the inside of the housing 1. That is, in the final molded battery, the another portion of the electrode connection member 22 is bent under the action of the inward retracted portion 12, and in the invention, a portion of the electrode connection member 22 is stacked on one side of the tab connection member 23, so that another portion of the electrode connection member 22 has a bending space, thereby facilitating the molding of the connection member 2 and the battery.

Referring to FIGS. 2 and 5, along the axial direction of the housing 1, the electrode connection member 22 at least partially overlaps the tab connection member 23;
along the axial direction of the housing 1, a fixed connection portion between the electrode connection member 22 and the tab connection member 23 has a length L8, and a contact portion between the electrode connection portion 22 and the tab connection member 23 has a length L9, where L8≤L9.

It should be understood, If L8>L9, the length of the fixed connection portion between the electrode connection member 22 and the tab connection member 23 may be greater than that of the contact portion between the electrode connection member 22 and the electrode connection member 23, and the fixed connection portion may be protruded from the contact portion, which is not conducive to the connection of the electrode connection member 22 to the tab connection member 23, while the length required for the package portion 3 to cover the fixed connection portion also needs to be increased, which is not conducive to the package portion 3 to package the connection between the electrode connection member 22 and the tab connection member 23. Therefore, in the invention, L8 is set to be less than or equal to L9 to facilitate the connection of the electrode connection member 22 to the tab connection member 23, while it is also possible to avoid that the fixed connection portion protrudes from the contact portion, thereby facilitating the arrangement of the package portion 3.

It should be understood that the electrode connection member 22 includes a connection surface connected to the tab connection member 23, and a portion of the connection surface fixedly connected to the tab connection member 23 is the fixed connection portion. When L8 is less than L9, it is illustrated that the connection surface has a portion that is not fixedly connected to the tab connection portion 23, that is, is only abutted against or spaced apart from the tab connection portion 23 at intervals.

**In** some examples, the electrode connection member 22 and the tab connection member 23 are fixedly connected to each other by welding, and the fixed connection portion between the electrode connection member 22 and the tab connection member 23 refers to a welding portion between the electrode connection portion 22 and the tab connection member 23.

In some embodiments, there are at least two electrode connection members, and along the radial direction of the housing, contact portions between at least two different ones of the electrode connection members and the tab connection member have different lengths.

In some embodiments, referring to FIGS. 2 and 5, the length of the tab connection member 23 is L1, where L9≤L1. When L9 is greater than L1, the structure of the electrode connection member 22 needs to be extended and connected to the side wall of the tab connection member 23, resulting in a complex structure of the electrode connection member 22. Therefore, the invention sets L9 to be less than or equal to L1.

**In** some embodiments, referring to FIGS. 2, 5, and 6, the electrode connection member 22 includes a first connection segment 223 and a second connection segment 224, where the second connection segment 224 connects the first connection segment 223 with the housing 1, a second end of the first connection segment 223 is protruded or bent away from the tab connection member 23 relative to the first end of the first connection segment 223.

It should be understood that the second end of the first connection segment 223 is protruded or bent away from the tab connection member 23, and that the second connection segment 224 is connected to the second end of the first connection segment 223, so that the second connection segment 224 is protruded from the tab connection member 23 to facilitate connection of the second connection segment 224 to the housing 1.

In some examples, the first end of the first connection segment 223 is stacked on the tab connection member 23.

An accommodating space 24 is formed between the first end of the first connection segment 223 and the tab connection member 23, so that the package portion 3 is disposed between the first end of the first connection segment 223 and the tab connection member 23 and can prevent the contact position between the first end of the first connection segment 223 and the tab connection member 23 from contacting other substances, and can effectively prevent corrosion of the contact position between the first end of the first connection segment 223 and the tab connection member 23.

An accommodating space 24 is formed between the second end of the first connection segment 223 and the tab connection member 23, so that the package portion 3 is disposed between the second end of the first connection segment 223 and the tab connection member 23 and can prevent the contact position between the second end of the first connection segment 223 and the tab connection member 23 from contacting other substances, and can effectively prevent corrosion of the contact position between the second end of the first connection segment 223 and the tab connection member 23.

In some embodiments, referring to FIG. 2, the package portion 3 is provided at the connection between the first connection segment 223 and the second connection segment 224.

It should be understood that, by providing the package portion 3 at the connection between the first connection segment 223 and the second connection segment 224, the package portion 3 may prevent the connection between the first connection segment 223 and the second connection segment 224 from contacting other substances to prevent corrosion of the connection between the first connection segment 223 and the second connection segment 224.

In some embodiments, the package portion 3 is provided at at least a portion of the first connection segment 223.

It should be understood that, by providing the package portion 3 at at least the portion of the first connection segment 223, a position of the first connection segment 223 where the package portion 3 is provided can be prevented from contacting other substances under the action of the package portion 3, so that the position of the first connection segment 223 where the package portion 3 is provided is not easily corroded, the corrosion rate of the entire first connection segment 223 can be effectively delayed, the structure stability of the first connection segment 223 and the connection member 2 is improved, and the connection stability between the housing 1 and the tab is improved.

In some embodiments, the package portion 3 is provided at at least a portion of the second connection segment 224.

It should be understood that, by providing the package portion 3 at at least the portion of the second connection segment 224, a position of the second connection segment 224 where the package portion 3 is provided can be prevented from contacting other substances under the action of the package portion 3, so that the position of the second connection segment 224 where the package portion 3 is provided is not easily corroded, the corrosion rate of the entire second connection segment 224 can be effectively delayed, the structure stability of the second connection segment 224 and the connection member 2 is improved, and the connection stability between the housing 1 and the tab is improved.

In some embodiments, the package portion 3 is provided between the second connection segment 224 and the housing 1.

It should be understood that the package portion 3 can prevent an impurity from entering the connection between the second connection segment 224 and the housing 1, thereby preventing the impurity from affecting the connection strength between the second connection segment 224 and the housing 1.

In some embodiments, the second connection segment 224 is located on a side of the first connection segment 223 away from an inner bottom wall of the housing 1. As such, a space is formed between the second connection segment 224 and the tab connection member 23 and the second connection segment 224 may be bent toward the tab connection member 23, thereby facilitating bending molding of the connection member 2.

In some examples, the second connection segment 224 is connected to an inward retracted portion 12 of the housing 1, and the inward retracted portion 12 of the housing 1 may be protruded toward the inside of the housing 1. That is, in the final molded battery, the second connection segment 224 is bent under the action of the inward retracted portion 12, and in the invention, the first connection segment 223 is located between the second connection segment 224 and the inner bottom wall of the housing 1, so that the second connection segment 224 has a bending space, thereby facilitating the molding of the connection member 2 and the battery.

In some embodiments, referring to FIGS. 5, 6, 7, and 8, the electrode connection member 22 further includes a third connection segment 225 connecting the first connection segment 223 with the second connection segment 224. As such, the first connection segment 223 and the second connection segment 224 are spaced apart from each other at internals, and an accommodating cavity 226 is formed between the first connection segment 223 and the second connection segment 224 along the axial direction of the housing 1.

It should be understood that the third connection segment 225 connects the first connection segment 223 with the second connection segment 224 to increase a distance between the second connection segment 224 and the tab connection member 23, so that the accommodating cavity 226 for bending the second connection segment 224 is formed between the second connection segment 224 and the tab connection member 23 to facilitate bending and molding of the connection member 2.

It should be understood that the second connection segment 224 is connected to the inward retracted portion 12, and a distance between the second connection segment 224 and the tab connection member 23 is increased by the arrangement of the third connection segment 225. When the inward retracted portion is convex to the inside of the housing 1, since the third connection segment 225 is provided, the distance between the inward retracted portion and the tab connection member 23 can be increased, and contact between the inward retracted portion and the tab connection member 23 can be avoided.

Illustratively, the third connection segment 225 may be a straight segment or a bending segment.

Referring to FIG. 5, along the radial direction of the housing 1, the tab connection member 23 has a length L1 and the housing 1 has a diameter L2, where a ratio of L1 to L2 is between 0.1 and 0.95.

It should be understood that, if the ratio of the length of the tab connection member 23 to the diameter of the housing 1 is less than 0.1, the length of the tab connection member 23 is relative short, which prevents the electrode connection member 22 from being stacked on the tab connection member 23, i.e., prevents the connection of the tab connection member 23 to the electrode connection member 22; and if the ratio of the length of the tab connection member 23 to the diameter of the housing 1 is greater than 0.95, the distance between the tab connection member 23 and the inner wall surface of the housing 1 is smaller, so that the third connection segment 225 and the second connection segment 224 are protruded from the tab connection member 23 in a short distance, which is not conducive to the bending and molding of the second connection segment 224. Therefore, the invention sets the ratio of the length of the tab connection member 23 to the diameter of the housing 1 to be between 0.1 and 0.95.

Referring to FIG. 5, along the axial direction of the housing 1, a fixed connection portion between the electrode connection member 22 and the tab connection member 23 has a length L8, and the tab connection member 23 has a length L1, where a ratio of L8 to L1 is between 0.05 and 0.5.

It should be understood that if the ratio of L8 to L1 is less than 0.05, the length of the fixed connection portion between the electrode connection member 22 and the tab connection member 23 may be shorter, and the connection stability between the electrode connection member 22 and the tab connection member 23 is insufficient; and if the ratio of L8 to L1 is greater than 0.5, the connection difficulty may be increased. Therefore, the invention sets the ratio of L8 to L1 to be between 0.05 and 0.5.

In some embodiments, referring to FIG. 5, the package portion 3 is provided at the connection between the third connection segment 225 and the first connection segment 223.

**It** should be understood that the package portion 3 may prevent the connection between the third connection segment 225 and the first connection segment 223 from contacting other substances to prevent corrosion of the connection between the third connection segment 225 and the first connection segment 223 and improve the connection stability between the third connection segment 225 and the first connection segment 223.

In some embodiments, the package portion 3 is provided at the connection between the third connection segment 225 and the second connection segment 224.

It should be understood that the package portion 3 may prevent the connection between the third connection segment 225 and the second connection segment 224 from contacting other substances to prevent corrosion of the connection between the third connection segment 225 and the second connection segment 224 and improve the connection stability between the third connection segment 225 and the second connection segment 224.

In some embodiments, the package portion 3 is provided at at least a portion of the third connection segment 225.

It should be understood that, by providing the package portion 3 at at least the portion of the third connection segment 225, a position of the second connection segment 225 where the package portion 3 is provided can be prevented from contacting other substances under the action of the package portion 3, so that the position of the third connection segment 225 where the package portion 3 is provided is not easily corroded, the corrosion rate of the entire third connection segment 225 can be effectively delayed, the structure stability of the third connection segment 225 and the connection member 2 is improved, and the connection stability between the housing 1 and the tab is improved.

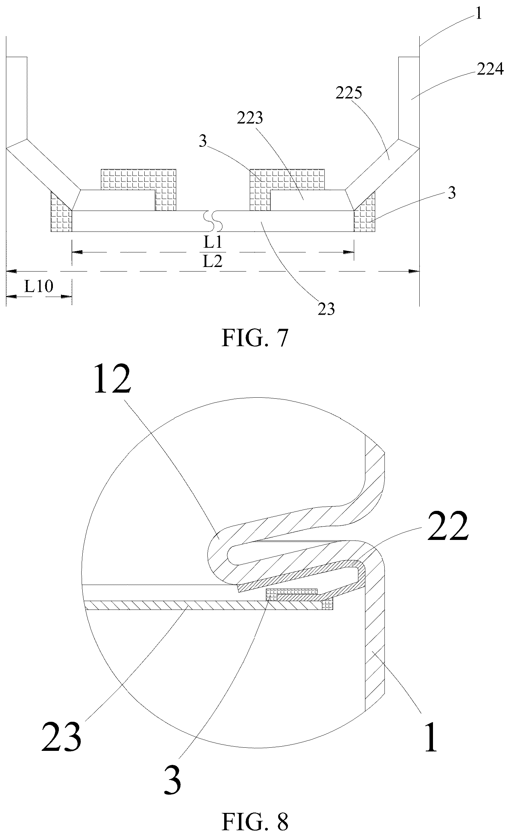

In some embodiments, referring to FIGS. 5 and 7, along the radial direction of the housing 1, a distance between an end portion of the tab connection member 23 and an inner wall surface of the housing 1 is L10.

Referring to FIGS. 5 and 7, the second connection segment 224 has a first surface 2241 toward the first connection segment 223, a line of intersection of an extension surface of the first surface 2241 with a side wall surface of the housing 1 is a first intersection line, the tab connection member 23 has a second surface 2301 away from the first connection segment 223, a line of intersection of an extension surface of the second surface 2301 with the side wall surface of the housing 1 is a second intersection line, and a vertical distance between the first intersection line and the second intersection line is L11, where L10≤L11. It should be understood that, if L10 is greater than L11, the length of the third connection segment 225 may be relatively long along the radial direction of the housing 1, resulting in the length of the connection member 2 to be relatively long, which can easily have a great influence on the size of the battery. Therefore, in the invention, L10 is set to be less than or equal to L11.

Referring to FIGS. 5 and 7, along the axial direction of the housing 1, a length of the contact portion between the electrode connection member 22 and the tab connection member 23 is L9, where L10≤L9. It should be understood that, if L10 is greater than L9, the length of the contact portion between the electrode connection member 22 and the tab connection member 23 may be relatively short along the radial direction of the housing 1 without affecting the size of the battery, and the length of the fixed connection portion between the electrode connection member 22 and the tab connection member 23 may also be relatively short, which is not conducive to connection of the electrode connection member 22 with the tab connection member 23. Therefore, in the invention, L10 is set to be less than or equal to L9.

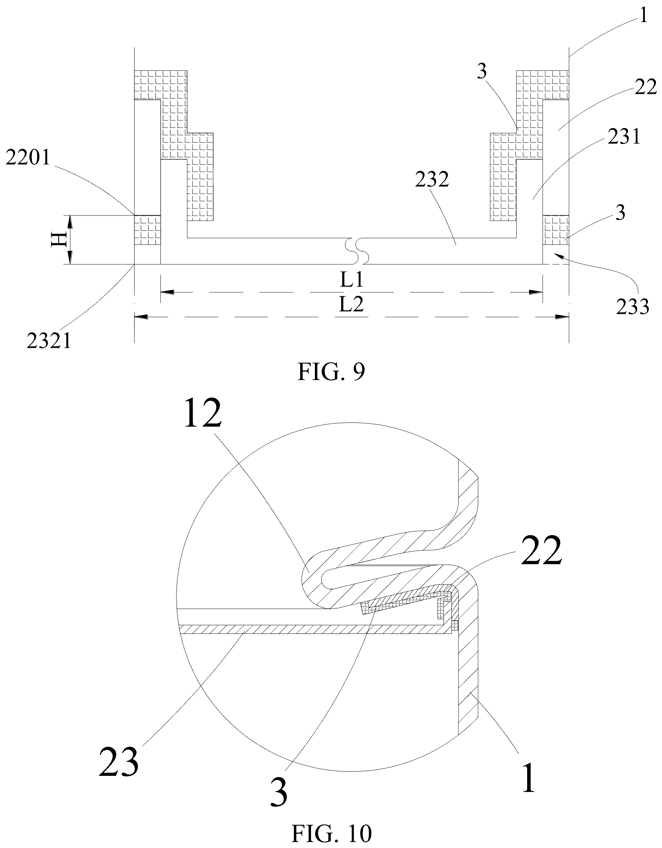

In some embodiments, referring to FIGS. 9 and 10, the tab connection member 23 includes a first tab connection member 231 and a second tab connection member 232, where the first tab connection member 231 is connected to an end portion of the second tab connection member 232, the second tab connection member 232 is used to connect the tab, and the electrode connection member 22 is connected to a side of the first tab connection member 231 away from the second tab connection member 232.

The first tab connection member 231 is protruded from the second tab connection member 232 along the axial direction of the housing 1, and the package portion 3 is provided at the connection between the first tab connection member 231 and the electrode connection member 22.

It should be understood that the first tab connection member 231 is protruded from the second tab connection member 232, and a space for accommodating the package portion 3 is formed at a contact position between the first tab connection member 231 and the second tab connection member 232, thereby facilitating the arrangement of the package portion 3.

By providing the package portion 3 at the connection between the first tab connection member 231 and the electrode connection member 22, the package portion 3 can prevent the connection between the first tab connection member 231 and the electrode connection member 22 from contacting other substances to prevent corrosion of the connection between the first tab connection member 231 and the electrode connection member 22, thereby improving the connection stability between the first tab connection member 231 and the electrode connection member 22.

In some embodiments, referring to FIG. 9, the first tab connection 231 and the housing 1 are spaced apart from each other at intervals to avoid direct contact between the first tab connection 231 and the housing 1 while further facilitating the provision of the package portion 3 between the first tab connection 231 and the housing 1.

It should be understood that a package space 233 is formed between the first tab connection member 231 and the inner wall surface of the housing 1 and used to accommodate the package portion 3.

It should be understood that, by forming the package space 233 between the first tab connection member 231 and the inner wall surface of the housing 1, the arrangement of the package portion 3 is facilitated, so that the package portion 3 can be better provided at the connection between the first tab connection member 231 and the housing 1.

A line of intersection of an extension surface of the second tab connection member 232 away from a surface of the electrode connection member 22 with the side wall surface of the housing 1 is a third intersection line 2321, a line of intersection of an end surface of the electrode connection member 22 toward the second tab connection member 232 with the side wall surface of the housing 1 is a fourth intersection line 2201, and a vertical distance between the third intersection line 2321 and the fourth intersection line 2201 is greater than 0.12 mm, thereby ensuring that the space between the third intersection line 2321 and the fourth intersection line 2201 can accommodate a sufficient package portion 3.

It should be understood in the present embodiment that the height H of the package space 233 is greater than 0.12 mm along the axial direction of the housing 1. If the height H of the package space 233 is not greater than 0.12 mm, the height of the package space 233 may be relatively low, making it difficult for the package space 233 to accommodate the package portion 3. Therefore, in the invention, the height of the package space 233 is set to be greater than 0.12 mm, so that the package space 233 can accommodate enough of package portions 3, thereby ensuring that the package portions 3 can play an effective package separation role on the connection between the first tab connection member 231 and the housing 1, thereby improving the corrosion prevention effect on the connection between the first tab connection member 231 and the housing 1. It is also possible to prevent the presence of the package portion 3 from being protruded to affect the connection of the tab connection 23 to the tab when the bottom of the electrode connection member 22 is flush with the bottom of the tab connection member 23.

In some embodiments, along the axial direction of the housing 1, the height of the electrode connection member 22 is less than the height of the first tab connection member 231,
where, a package space 233 is formed between a first end of the first tab connection member 231 and a first end of the electrode connection member 22 and used to accommodate the package portion 3; and/or
a package space 233 is formed between a second end of the first tab connection member 231 and a second end of the electrode connection member 22 and used to accommodate the package portion 3.

It should be understood that the electrode connection member 22 is connected to a side of the first tab connection member 231 away from the second tab connection member 232, and the height of the electrode connection member 22 is less than that of the first tab connection member 231, so that a space for accommodating the package portion 3 may be formed between the electrode connection member 22 and the end portion of the first tab connection member 231 to facilitate provision of the package portion 3 at the connection between the electrode connection member 22 and the first tab connection member 231.

A package space is formed between the first end of the first tab connection member 231 and the first end of the electrode connection member 22, so that the package portion 3 is provided at the connection between the first end of the first tab connection portion 231 and the first end of the electrode connection member 22.

A package space is formed between the second end of the first tab connection member 231 and the second end of the electrode connection member 22, so that the package portion 3 is provided at the connection between the second end of the first tab connection portion 231 and the second end of the electrode connection member 22.

In some embodiments, referring to FIG. 9, along the radial direction of the housing 1, an orthographic projection of the first tab connection member 231 on the side wall surface of the housing 1 at least partially overlaps an orthographic projection of the electrode connection member 22 on the side wall surface of the housing 1.

It should be understood that, when the orthographic projection of the first tab connection member 231 on the side wall surface of the housing 1 overlaps the orthographic projection of the electrode connection member 22 on the side wall surface of the housing 1, it is illustrated in this case that the first tab connection member 231 is protruded from the electrode connection member 22 or the electrode connection member 22 is protruded from the first tab connection member 231, which also means that a space for accommodating the package portion 3 may be formed at the connection between the first tab connection member 231 and the electrode connection member 22, thereby facilitating the provision of the package portion 3 at the connection between the electrode connection member 22 and the first tab connection member 231.

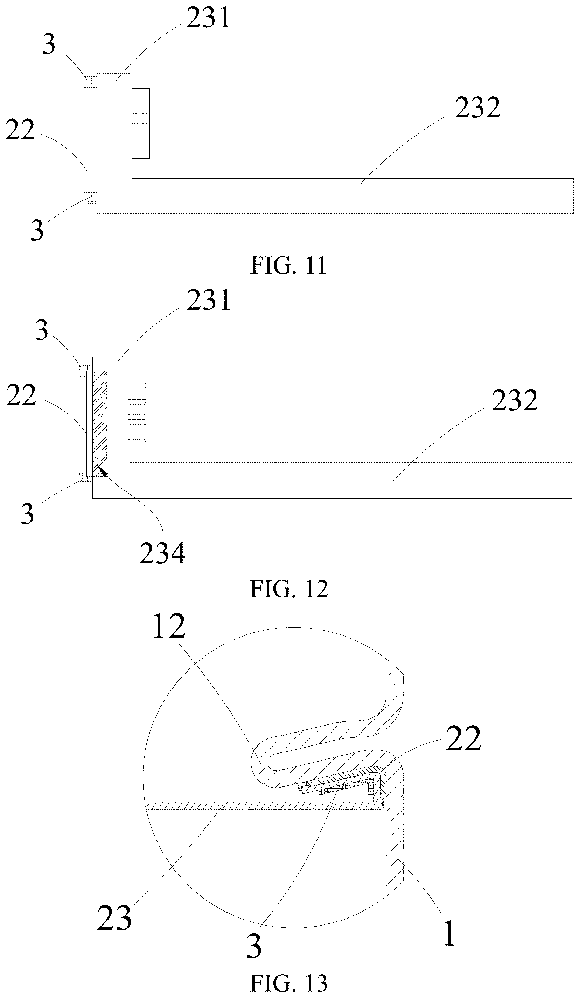

In some embodiments, referring to FIG. 11, along the radial direction of the housing 1, an orthographic projection of the electrode connection member 22 on the side wall surface of the housing 1 is located within an orthographic projection of the first tab connection member 231 on the side wall surface of the housing 1.

It should be understood that there is a certain distance between the electrode connection member 22 and the end portion of the first tab connection member 231 along the axial direction of the housing 1, that is, a space for accommodating the package portion 3 may be formed between the electrode connection member 22 and the end portion of the first tab connection member 231, thereby facilitating the provision of the package portion 3 at the connection between the electrode connection member 22 and the first tab connection member 231.

In some embodiments, referring to FIGS. 12 and 13, an accommodating groove 234 is formed on a side of the first tab connection member 231 adjacent to the side wall of the housing 1, one portion of the electrode connection member 22 is located in the accommodating groove 234, and another portion of the electrode connection member 22 is protruded from the accommodating groove 234 and connected to the housing 1.

It should be understood that the accommodating groove 234 may serve as a limiting function for the electrode connection member 22 to improve the connection stability between the electrode connection member 22 and the first tab connection member 231. At least a portion of the electrode connection member 22 is protruded from the accommodating groove 234, thereby facilitating the connection of the electrode connection member 22 to the housing 1.

In some embodiments, a gap is provided between the electrode connection member 22 and the side wall surface of the accommodating groove 234, and the package portion 3 between the electrode connection member 22 and the first tab connection member 231 is at least partially provided in the gap.

It should be understood that at least a portion of the package portion 3 is provided at the gap, so that the package portion 3 can prevent other substances from appearing at the gap, and thus can prevent the connection between the electrode connection member 22 and the first tab connection member 231 from contacting other substances. As such, the connection between the electrode connection member 22 and the first tab connection member 231 is not easily corroded.

In some embodiments, referring to FIG. 12, a package portion 3 is provided between the electrode connection member 22 and the side wall surface of the tab connection member 23 toward the side wall of the housing 1.

It should be understood that the electrode connection member 22 is provided within the accommodating groove 234 of the first tab connection member 231, and by providing the package portion between the electrode connection member 22 and the side wall surface of the tab connection member 23 toward the side wall of the housing, the package portion 3 can enclose a notch of the accommodating groove 234, and package a position between the electrode connection member 22 and the notch of the accommodating groove 234. As such, the contact position between the electrode connection member 22 and the notch of the accommodating groove 234 does not contact other substances, and other substances do not enter the accommodating groove 234, thereby effectively preventing corrosion of the connection between the electrode connection member 22 and the first tab connection member 231.

In some embodiments, a thickness of the electrode connection member 22 is less than a thickness of the first tab connection member 231.

It should be understood that, if the thickness of the electrode connection member 22 is greater than the thickness of the first tab connection member 231, the overall thickness of the electrode connection member 22 and the first tab connection member 231 may be relative large along the radial direction of the housing 1, which may affect the battery. Therefore, in the invention, the thickness of the electrode connection member 22 is set to be less than the thickness of the first tab connection member 231.

In some embodiments, the package portion 3 is provided on a side of the first tab connection member 231 adjacent to the center of the housing 1.

It should be understood that the package portion 3 is provided on the side of the first tab connection member 231 adjacent to the center of the housing 1, that is, the package portion 3 and the accommodating groove 234 are respectively located on opposite sides of the first tab connection member 231. In a battery production process, an inward retracted portion of the housing 1 may enable the first tab connection member 231 to be bent toward a center direction of the housing 1, so that the package portion 3 may be located at a bending portion of the first tab connection member 231, thereby realizing packaging protection for the bending portion of the first tab connection 231, preventing the bending portion of the first tab connection member 231 from contacting other substances, and preventing corrosion of the bending portion of the first tab connection member 231.

In some embodiments, a contact area between the tab connection member 23 and the tab is S1, a welding area between the tab connection member 23 and the tab is s1, and a metal overcurrent capacity per unit area at the contact position between the tab connection member 23 and the tab is 11; a contact area between the tab connection member 23 and the electrode connection member 22 is S2, a welding area between the tab connection member 23 and the electrode connection member 22 is s2, and a metal overcurrent capacity per unit area at the contact position between the tab connection member 23 and the electrode connection member 22 is I2; a contact area between the electrode connection member 22 and the housing 1 is S3, a welding area between the electrode connection member 22 and the housing 1 is s3, and a metal overcurrent capacity at the contact position between the electrode connection member 22 and the housing 1 is I3; and an overcurrent requirement of the battery is a.

S1≥a/I1, S2≥a/I2, and S3≥a/I3, so as to effectively control a temperature increasing speed of the battery to prevent the temperature of the battery from being excessively high.

s1/S1=10%-90%, s2/S2=10%-90%, and s3/S3=10%-90%, so as to effectively control the temperature increasing speed of the battery to prevent the temperature of the battery from being excessively high.

It should be understood that the overcurrent capacity is in units of A (amps), the overcurrent requirement is in units of A/mm², and the contact area is in units of mm².

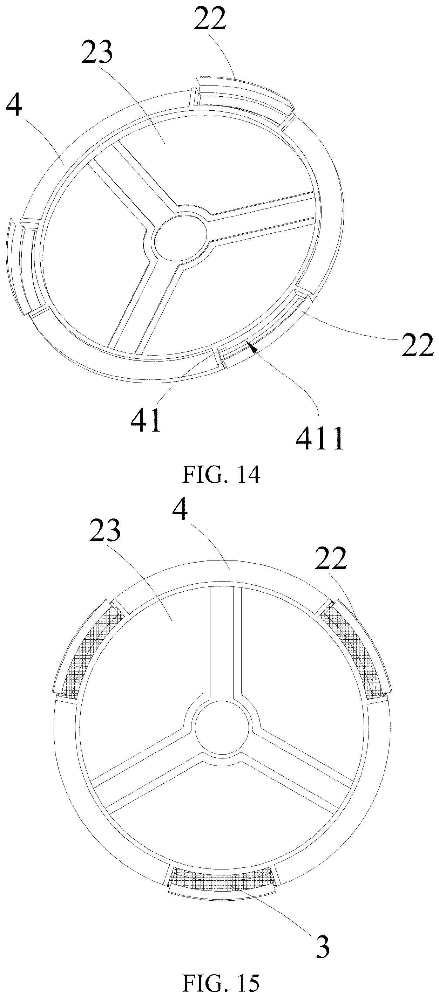

In some embodiments, referring to FIG. 14, the connection member 2 includes a plurality of tab connection members 23 each having an arc-shaped block, the plurality of tab connection members 23 are concentric, a sum of lengths of two side edges and a length of an outer wall surface of each of the tab connection members 23 is R1, and a height of a contact portion between the each of the electrode connection members 22 and the housing 1 is H1, where R1×H1≥a/I2, so as to effectively control the temperature increasing speed of the connection member 2 to improve the safety and stability of the battery.

In some embodiments, referring to FIGS. 14 and 15, the battery further includes a mounting bracket 4 fixed within the housing 1, where the connection member 2 is mounted to the mounting bracket 4, and the mounting bracket 4 is used to support the connection member 2.

It should be understood that the connection member 2 is mounted to the mounting bracket 4 and the mounting bracket 4 is used to support the connection member 2, thereby improving the stability of the connection member 2 and improving the stability of the connection of the connection member 2 to the housing 1 and the tab.

In some examples, the mounting bracket 4 is fixedly connected to the housing 1 or fixed onto a current collector of the battery mounted in the housing 1.

**In** some embodiments, referring to FIGS. 14 and 15, the connection member 2 includes an electrode connection member 22 connected to the housing 1 and a tab connection member 23 connected to the tab, the mounting bracket 4 is formed with a limiting portion 41, the tab connection member 23 is fixedly connected to one side of the mounting bracket 4, and the electrode connection member 22 is provided at the limiting portion 41.

It should be understood that the electrode connection member 22 is provided at the limiting portion 41 and the limiting portion 41 may serve as a limiting function for the electrode connection member 22, thereby improving the mounting stability of the electrode connection member 22. As such, the electrode connection member 22 and the tab connection member 23 can be stably connected with each other.

Illustratively, the tab connection member 23 is fixedly connected to a lower surface of the mounting bracket 4.

In some embodiments, referring to FIGS. 14 and 15, the limiting portion 41 includes a limiting groove 411 formed with a connection hole, the electrode connection member 22 includes oppositely disposed first end and second end, where the first end of the electrode connection member 22 is connected to the tab connection member 23 through the connection hole, and the second end of the electrode connection member 22 is connected to the housing 1 through the notch of the limiting groove 411.

It should be understood that the electrode connection member 22 is connected to the tab connection member 23 through the connection hole of the limiting groove 411, thereby improving the convenience of connecting the electrode connection member 22 to the tab connection member 23. The electrode connection member 22 may further be provided through the notch to be connected to the housing 1, which is simple and convenient.

In some embodiments, referring to FIGS. 14 and 15, the limiting groove 411 is filled with the package portion 3.

It should be understood that the limiting groove 411 is used to accommodate the package portion 3 and the limiting groove 411 may serve as a limiting function for the package portion 3, so that the package portion 3 can be stably positioned in the limiting groove 411, thereby facilitating the arrangement and molding of the package portion 3.

Wall surfaces of the tab connection member 23, the electrode connection member 22, and the limiting groove 411 may enclose a space for accommodating the package portion 3, and the package portion 3 is provided in the limiting groove 411, and the package portion 3 may package and isolate the connection between the electrode connection member 22 and the tab connection member 23 while the limiting groove 411 may limit the package portion 3, so that the package portion 3 may better package and isolate the connection between the electrode connection member 22 and the tab connection member 23.

In some embodiments, referring to FIG. 1, the battery further includes an electrode assembly, the housing 1 is formed with a mounting cavity 11, and the electrode assembly is mounted within the mounting cavity 11.

The housing 1 is formed with an inward retracted portion 12, the inward retracted portion 12 is protruded into the mounting cavity 11, the connection member 2 is positioned between the inward retracted portion 12 and the electrode assembly, and the connection member 2 connects the inward retracted portion 12 with a positive tab of the electrode assembly, so that the connection member 2 can connect the positive tab of the battery with the housing 1 together.

The connection member 2 is positioned between the electrode assembly and an inner bottom wall of the housing 1, and the connection member 2 connects a negative tab of the electrode assembly with the inner bottom wall of the housing 1, so that the connection member 2 can connect the negative tab of the battery with the housing 1 together.

In some examples, the housing 1 has a structure in which one end of the housing 1 is opened and another end of the housing 1 is closed, a bottom portion of the housing 1 opposite to the opening is provided with a terminal hole, and a terminal is provided through the terminal hole and connected to the housing 1 in an insulating and sealing manner by an insulating member.

In some examples, the housing 1 is a steel housing, the housing 1 is plated with a nickel layer at least at a position where the housing 1 is in contact with the electrode connection member 22, the tab connection member 23 is copper, the tab connected to the tab connection member 23 is copper, and the electrode connection member 22 is nickel.

In some examples, an inner wall of the housing 1 is coated with nickel, and an outer side wall of the housing 1 may also be coated with a nickel layer.

In some embodiments, the tab connection member 23 is spaced apart from the inward retracted portion 12 at intervals.

It should be understood that the tab connection 23 is spaced apart from the inward retracted portion 12 at intervals, so that the tab connection member 23 does not directly contact the inward retracted portion 12, thereby reducing a connection point between the connection member 2 and the housing 1 and avoiding problems such as corrosion caused by the contact between the tab connection 23 and the inward retracted portion 12.

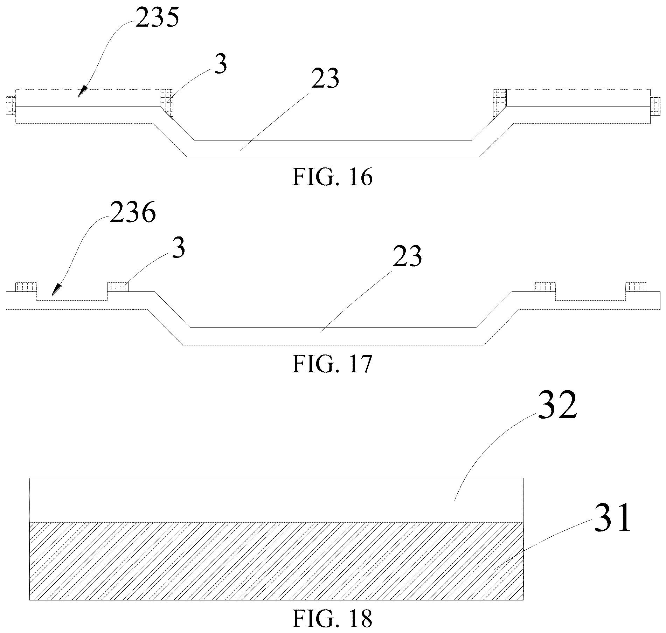

In some embodiments, referring to FIG. 16, the connection member 2 includes a tab connection member 23 connected to the tab, and an avoidance space 235 is formed at one side of the tab connection member 23 toward the inward retracted portion 12 and used to accommodate the inward retracted portion 12, so that the inward retracted portion 12 is spaced apart from the tab connection member 23 at intervals.

It should be understood that, by forming the avoidance space 235 at the one side of the tab connection member 23 toward the inward retracted portion 12, the avoidance space 235 may be used to accommodate the inward retracted portion 12 when the battery is formed, that is, when the inward retracted portion 12 is protruded into the mounting cavity 11, so that the inward retracted portion 12 is spaced apart from the tab connection 23 at intervals, thereby preventing the inward retracted portion 12 from contacting the tab connection member 23.

In some examples, the avoidance space 235 may be adjacent to the tab connection member 23, and the avoidance space 235 may also be formed by the tab connection member 23.

In some embodiments, referring to FIG. 17, an avoidance groove 236 is formed at one side of the tab connection member 23 toward the inward retracted portion 12 and used to accommodate the inward retracted portion 12, so that the inward retracted portion 12 is spaced apart from the tab connection member 23 at intervals.

It should be understood that, the avoidance groove 236 may be used to accommodate the inward retracted portion 12 when the battery is formed, that is, when the inward retracted portion 12 is protruded into the mounting cavity 11, so that the inward retracted portion 12 is spaced apart from the tab connection 23 at intervals, thereby preventing the inward retracted portion 12 from contacting the tab connection member 23.

In some embodiments, the battery further includes a cover plate to which the connection member 2 is electrically connected.

It should be understood that the connection member 2 is electrically connected to the cover plate, so that the cover plate is electrically charged and corrosion of the cover plate can be prevented.

In some examples, the cover plate is provided at the opening of the housing 1, and a seal member is provided at the connection between the cover plate and the housing 1, so as to improve a sealing performance of the connection of the cover plate with the housing 1.

In some examples, the cover plate is connected to the housing 1 in an insulating manner.

In some embodiments, the package portion 3 is a package glue or a thermoplastic film. It should be noted that only the type of the package portion 3 is illustrated by example and not particularly limited, and the package portion 3 may further be of any other suitable material.

In some embodiments, the package portion 3 has an irregular shape.

It should be understood that, when the package portion 3 is provided, it is possible to inject a fluid-like package portion 3 to a predetermined position so as to facilitate the arrangement of the package portion 3, and the package portion 3 can be molded and fixed after cooling of the package portion 3. Therefore, the package portion 3 may have an irregular shape.

In some embodiments, the thickness of the package portion 3 is equal along the axial direction of the battery or along the radial direction of the battery, thereby ensuring uniformity of the package protection effect of the package portion 3.

In some embodiments, the thickness of the package portion 3 is unequal along the axial direction of the battery or along the radial direction of the battery. More package portions 3 may be provided at positions of different structures that need key protection, such as the connection or bending portions, i.e., the thickness of the package portions 3 at the positions of the different structures that need the key protection, such as the connection or bending portions, may be greater than that at other positions, thereby improving the protection effect on the key positions.

In some embodiments, a thickness of the package portion 3 is between 1 mm and 2 mm along the axial direction of the battery or along the radial direction of the battery.

It should be understood that, when the thickness of the package portion 3 is less than 1 mm, the protection effect of the package portion 3 may be insufficient; and when the thickness of the package portion 3 is greater than 2 mm, the overall thickness of the connection member 2 may be greatly affected and it may be difficult to bend and mold the connection member 2. Therefore, in the invention, the thickness of the package portion 3 is set to be between 1 mm and 2 mm, so that the package portion 3 can have a sufficient protection effect without having a great influence on the overall thickness of the connection member 2, and it is ensured that the connection member 2 can be successfully bent and molded.

In some embodiments, referring to FIG. 18, the package portion 3 includes a package layer 31 and an insulating protective layer 32.

The package layer 31 is provided at the connection between the electrode lead-out portion 201 and the tab connection portion 202, and the package layer 31 is located at one side of the package layer 31 away from the connection between the electrode lead-out portion 201 and the tab connection portion 202.

It should be understood that the package layer 31 serves as a package protection for the connection between the electrode lead-out portion 201 and the tab connection portion 202, so that an impurity can be prevented from entering the connection between the electrode lead-out portion 201 and the tab connection portion 202. The insulating protective layer 32 may protect the package layer 31, so that the package layer 31 is not affected by other substances and the package layer 31 may serve as a package protection for the connection between the electrode lead-out portion 201 and the tab connection portion 202.

The package layer 31 is provided at the connection between the electrode lead-out portion 201 and the electrode of the battery, and the insulating protective layer 32 is connected to one side of the package layer 31 away from the connection between the electrode lead-out portion 201 and the electrode.

It should be understood that the package layer 31 serves as a package protection for the connection between the electrode lead-out portion 201 and the electrode, so that an impurity can be prevented from entering the connection between the electrode lead-out portion 201 and the electrode. The insulating protective layer 32 may protect the package layer 31, so that the package layer 31 is not affected by other substances and the package layer 31 may serve as a package protection for the connection between the electrode lead-out portion 201 and the electrode.

In some embodiments, the package portion 3 is protruded from the connection between the electrode lead-out portion 201 and the tab connection portion 202, so that the package portion 3 may better serve as a package protection effect for the connection between the electrode lead-out portion 201 and the tab connection portion 202 and an impurity may be prevented from entering the connection between the electrode lead-out portion 201 and the tab connection portion 202.

Along the axial direction of the housing, the length of the package portion 3 protruded from the connection between the electrode lead-out portion 201 and the tab connection portion 202 is between 0 mm and 4 mm.

It should be understood that, if the length of the protruded portion of the package portion 3 is less than 0 mm, the package portion 3 has a poor protective effect on the connection between the electrode lead-out portion 201 and the tab connection portion 202; and if the length of the protruded portion of the package portion 3 is greater than 4 mm, the package portion 3 easily affects the sealing of the housing of the battery. Therefore, in the invention, the length of the protruded portion of the package portion 3 is set to be between 0 mm and 4 mm.

In some embodiments, the package portion 3 is protruded from the connection between the electrode lead-out portion 201 and the electrode of the battery, so that the package portion 3 may better serve as a package protection effect for the connection between the electrode lead-out portion 201 and the electrode of the battery and an impurity may be prevented from entering the connection between the electrode lead-out portion 201 and the electrode of the battery.

Along the axial direction of the housing, the length of the package portion 3 protruded from the connection between the electrode lead-out portion 201 and the electrode of the battery is between 0 mm and 4 mm.

It should be understood that, if the length of the protruded portion of the package portion 3 is less than 0 mm, the package portion 3 has a poor protective effect on the connection between the electrode lead-out portion 201 and the electrode of the battery; and if the length of the protruded portion of the package portion 3 is greater than 4 mm, the package portion 3 easily affects the sealing of the housing of the battery. Therefore, in the invention, the length of the protruded portion of the package portion 3 is set to be between 0 mm and 4 mm.

In some embodiment, the connection member 2 is a symmetrical structure.

It should be noted that the connection member 2 being the symmetrical structure may mean that most of the structure of the connection member 2 is symmetrical, i.e. does not represent that the connection member 2 is structurally completely symmetrical.

In some example, the connection member 2 may be a centrally symmetrical structure.

In some embodiments, the battery includes:
a housing formed with an inward retracted portion, the inward retracted portion protruding toward the inside of the housing;
a connection member including an electrode connection member and a tab connection member connected in sequence, where the electrode connection member connects the inward retracted portion with the tab connection member, and the tab connection member is adapted to be connected with the tab of the battery;
a package portion provided at at least a portion of the connection member; and
an electrode assembly, where the housing is formed with a mounting cavity, and the electrode assembly is mounted within the mounting cavity.

A first end of the electrode connection member is connected to the tab connection member, and a second end of the electrode connection member is connected to the inward retracted portion and is spaced apart from the tab connection member at intervals.

The connection member is provided at one side of the inward retracted portion,
where at least a portion of the electrode connection member is connected to one side of the inward retracted portion toward the electrode assembly; and/or
at least a portion of the electrode connection member is connected to one side of the inward retracted portion away from the electrode assembly.

A position of connection of the electrode connection member with the tab connection member and a position of connection of the electrode connection member with the housing are located on different sides of the electrode connection member.

The package portion is provided at the connection between the electrode connection member and the inward retracted portion.

The housing includes a housing body and an inward retracted portion connected to the housing body.

At least a portion of the electrode connection member is protruded from the tab connection member in the radial direction of the housing and is connected to the housing body.

An included angle is formed between one side of the inward retracted portion toward the electrode assembly and the housing body, and a degree of the included angle is between 0 degrees and 150 degrees.

A minimum distance between the tab connection member and the inward retracted portion is greater than 0.05 mm.

The electrode connection member includes a first connection segment and a second connection segment connected in sequence, where the first connection segment is connected to the tab connection member, and the second connection segment is connected to the inward retracted portion.

A package portion is provided between the first connection segment and the tab connection member, and the package portion extends along a side of the first connection segment away from the tab connection member.

A first end of the first connection segment is stacked on the tab connection member, and a second end of the first connection segment is protruded or bent away from the tab connection member relative to the first end of the first connection segment.

A package portion is provided between a second end of the first connection segment and the tab connection member.

The second end of the first connection segment is connected to the housing, and the second end of the first connection segment, the tab connection member, and the housing enclose an accommodating space for accommodating the package portion.

The second connection segment includes a first secondary connection segment and a second secondary connection segment connected in sequence, where the first secondary connection segment is connected to the first connection segment, the second secondary connection segment is connected to the inward retracted portion.

The electrode connection member further includes a third connection segment connecting the first connection segment with the second connection segment.

The third connection segment is spaced apart from the housing at intervals.

A first end of the third connection segment is connected to the first connection segment, a second end of the third connection segment is bent toward the first connection segment relative to the first end of the third connection segment, and a package portion is provided between the second end of the third connection segment and the first connection segment.

The first end of the third connection segment is connected to the first connection segment, the second end of the third connection segment is connected to the second connection segment, and along a direction away from the tab connection member, the second end of the third connection segment extends toward and abuts against the side wall surface of the housing.

A package portion is provided between the first end of the third connection segment and the tab connection member.

The tab connection member includes a first tab connection member and a second tab connection member, where the first tab connection member is connected to an end portion of the second tab connection member, the second tab connection member is used to connect the tab, and the electrode connection member is connected to a side of the first tab connection member away from the second tab connection member.

The first tab connection member, the electrode connection member, and the housing enclose an accommodating space for accommodating the package portion.

A first end of the first tab connection member is connected to the second tab connection member, and a second end of the first tab connection member extends toward the inward retracted portion to be protruded from the first tab connection member.

A package portion is provided between the second end of the first tab connection member and the electrode connection member.

The first tab connection member is formed with an accommodating groove, one portion of the electrode connection member is located in the accommodating groove, and another portion of the electrode connection is protruded from the accommodating groove and connected to the housing.

The first tab connection member has a bending structure.

A package portion is provided at a bending portion of the first tab connection member.

The first end of the first tab connection member is connected to the second tab connection member,
where a package portion is provided between the second end of the first tab connection member and the inward retracted portion; and/or
the first end of the first tab connection member, the electrode connection member, and the housing enclose an accommodating space for accommodating the package portion.

In some embodiments, the connection member includes:
an electrode connection member adapted to be connected to the housing;
a tab connection member connected to the electrode connection member for connecting the electrode connection member with the tab; and
a package portion.

Where, the package portion is provided at the connection between the electrode connection member and the tab connection member; or, the package portion is provided at at least one of the electrode connection member and the tab connection member.

The electrode connection member is welded to the tab connection member, and the package portion is provided at the welding portion between the electrode connection member and the tab connection member.

At least a portion of the package portion is disposed around the welding portion between the electrode connection member and the tab connection member.

The electrode connection member is welded to the housing, and the package portion is provided at the welding portion between the electrode connection member and the housing.

At least a portion of the package portion is disposed around the welding portion between the electrode connection member and the housing.

The electrode connection member has a bending structure, and the package portion is provided at the bending portion of the electrode connection member.

The electrode connection member includes a first connection segment connected to the tab connection member and a second connection segment connected to both the first connection segment and the housing,
where at least a portion of the package portion covers the connection between the first connection segment and the tab connection member; and/or
at least a portion of the package portion covers the connection between the first connection segment and the second connection segment; and/or
at least a portion of the package portion covers the connection between the second connection segment and the housing.

The electrode connection member further includes a third connection segment connecting the first connection segment with the second connection,
where at least a portion of the package portion covers the connection between the third connection segment and the first connection segment; and/or
at least a portion of the package portion covers the connection between the third connection segment and the second connection segment; and/or
the third connection segment has a bending structure, and at least a portion of the package portion is provided at a bending portion of the third connection segment.

The tab connection member has a bending structure, and the package portion is provided at a bending portion of the tab connection member.

The tab connection member includes a first tab connection member and a second tab connection member, the first tab connection member connecting the second tab connection member with the electrode connection member, and the second tab connection member being used to connect the tab,
where at least a portion of the package portion covers the connection between the first tab connection member and the second tab connection member;
at least a portion of the package portion covers the connection between the first tab connection member and the electrode connection member; and
at least a portion of the package portion covers the connection between the second tab connection member and the tab.

In some embodiments, the connection member includes:
an electrode connection member adapted to be connected to an inner bottom wall of the housing of the battery;
a tab connection member adapted to be connected to a negative tab of the battery,
where the electrode connection member is stacked at one side of the tab connection member; or
the electrode connection member includes oppositely disposed first and second side surfaces, where the first side surface is connected to the housing and the tab connection member is connection to the second side surface.

The electrode connection member has a first connection surface, the tab connection member has a second connection surface, and the first connection surface is connected to the second connection surface,
where, at least one of the first connection surface and the second connection surface is provided with a plurality of grooves to increase a contact area between the first connection surface and the second connection surface;
at least one of the first connection surface and the second connection surface is a rough surface; and
at least one of the first connection surface and the second connection surface is provided with an embossing structure.

The electrode connection member is integrally formed with the tab connection member; or
the electrode connection member is connected to the tab connection member by at least one of electroplating, chemical plating, and spraying; or
the electrode connection member is connected to the tab connection member by at least one of welding, cold heading, thermal compounding, interfacing, riveting, and heat shrinkage.

The electrode connection member includes a first connection segment and a second connection segment connected in sequence,
where the first connection segment is integrally formed with the second connection segment; or
the first connection segment is connected to the second connection segment by at least one of a snap-in, a threaded connection, and an interference fit.

The tab connection member includes a first tab connection member and a second tab connection member,
where the first tab connection member is integrally formed with the second tab connection member; or
the first tab connection member is connected to the second tab connection member by at least one of a snap-in, a threaded connection, and an interference fit.

The electrode connection member is made of the same material as the tab connection member, and the electrode connection member is fixedly connected to the tab connection member by welding.

The electrode connection member is made of a different material from the tab connection member, and the electrode connection member is connected to the tab connection member by at least one of a snap-in, a threaded connection, and an interference fit.

The connection structure further includes a package portion provided at at least a portion of the electrode connection member and/or at least a portion of the tab connection member.

The electrode connection member is made of the same material as the housing, and the electrode connection member is fixedly connected to the tab connection member by welding.

The electrode connection member is made of a different material from the housing, and the electrode connection member is connected to the housing by at least one of a snap-in, a threaded connection, and an interference fit.

The electrode connection member is integrally formed with the housing.

**In** some embodiments, the connection member includes an electrode connection member adapted to be connected to the housing of the battery; and
the electrode connection member includes at least two connection segments connected in sequence, where, an accommodating cavity is at least provided between two ones of the connection segments.

The housing connection structure further includes a tab connection member connected to the electrode connection member and adapted to be connected to the tab of the battery.

The at least two connection segments include a first connection segment and a second connection segment, where the second connection segment connects the first connection segment with the housing, and an accommodating cavity is formed between the second connection segment and the first connection segment.

An extension direction of the first connection segment is different from an extension direction of the second connection segment.

A first end of the second connection segment is connected to the first connection segment, a second end of the second connection segment is bent toward the first connection segment relative to the first end of the second connection segment, and the second end of the second connection segment is spaced apart from the first connection segment at intervals.

The first connection segment is stacked on the tab connection member, the first end of the first connection segment is connected to the second connection segment, and the first end of the first connection segment is protruded from the tab connection member along the radial direction of the housing.

The at least two connection segments further include a third connection segment connecting the first connection segment with the second connection segment, so that the first connection segment and the second connection segment are spaced apart from each other at intervals.

The third connection segment has a linear segment or a bending structure.

The third connection segment is disposed obliquely relative to the first connection segment and/or the second connection segment.

A first end of the second connection segment is connected to the third connection segment, and a second end of the second connection segment is protruded from the first connection segment along the radial direction of the housing.

An insulating separation member is provided between the third connection segment and the first connection segment.

The first connection segment is connected to the tab connection member, and along a direction away from the tab connection member, an end of the third connection segment away from the first connection segment extends toward and abuts against the side wall surface of the housing.

In some embodiments, the connection member includes:
a tab connection member adapted to be provided at one side of the inward retracted portion of the housing of the battery, where an avoidance groove is provided at one side of the tab connection member toward the inward retracted portion and used to accommodate the inward retracted portion, so that the inward retracted portion is spaced apart from the tab connection member at intervals.

The avoidance space includes an avoidance groove formed in the tab connection member and used to accommodate the inward retracted portion.

The inward retracted portion is spaced apart from a wall surface of the avoidance groove at intervals.

The tab connection structure includes an insulating sheet provided on the wall surface of the avoidance groove to separate the inward retracted portion from the wall surface of the avoidance groove in an insulating manner.

A groove depth of the avoidance groove is gradually increased along a direction from the side wall of the housing to the center of the housing.

The tab connection structure further includes a separation portion connected to one side of the tab connection member toward the inward retracted portion and used to separate the inward retracted portion from the tab connection member.

A first end of the separation portion is fixedly connected to the tab connection member, and another end of the separation portion is connected to the inward retracted portion by snap-in or welding.

The tab connection structure further includes an insulation member connected to one side of the tab connection member toward the inward retracted portion.

The tab connection structure further includes an electrode connection member, where the tab connection member is connected to the electrode connection member, the electrode connection member is connected to the housing, and the tab connection member is connected to the tab.

The length of the avoidance space is greater than or equal to the length of the inward retracted portion along the radial length of the housing.

An electrode assembly is positioned between the inward retracted portion and the inner bottom wall of the housing,
where, the tab connection structure is positioned between the inward retracted portion and the electrode assembly; or
the tab connection structure is positioned at one side of the inward retracted portion away from the electrode assembly.

In some embodiments, the connection member includes:
an electrode connection member adapted to be connected to the housing of the battery; and
a tab connection member connected to the electrode connection member and adapted to be connected to the tab of the battery;
where, one of the tab connection member and the electrode connection member is formed with an accommodating groove, and another one of the tab connection member and the electrode connection member is at least partially inserted into the accommodating groove.

According to the connection structure of the embodiments of the invention, the accommodating groove may serve as a limiting function, so that one of the tab connection member and the electrode connection member may limit another one of the tab connection member and the electrode connection member, thereby improving the connection stability of the tab connection member and the electrode connection member, and further improving the structure stability of the connection structure itself.

In some embodiments, the another one of the tab connection member and the electrode connection member has a body inserted into the accommodating groove.

It should be understood that one of the tab connection member and the electrode connection member is formed with the accommodating groove, and the body of the another one of the tab connection member and the electrode connection member is inserted into the accommodating groove, so that at least a portion of the another one of the tab connection member and the electrode connection member is located in the accommodating groove, thereby reducing the overall size of the connection structure and facilitating miniaturization of the connection structure.

In some embodiments, the another one of the tab connection member and the electrode connection member is formed with a projection portion that snaps into the accommodating groove.

It should be understood that the one of the tab connection member and the electrode connection member is formed with the accommodating groove, and the projection portion of the another one of the tab connection member and the electrode connection member snaps into the accommodating groove, that is, the another one of the tab connection member and the electrode connection member is not integrally inserted into the accommodating groove, and only the projection portion is inserted into the accommodating groove, so that the connection area between the electrode connection member and the tab connection member can further be reduced while improving the connection stability between the electrode connection member and the tab connection member.

The smaller the connection area between the electrode connection member and the tab connection member, the smaller the package portion provided at the connection between the electrode connection member and the tab connection member, so that the arrangement of the package portion is facilitated, and the cost can be reduced.

In some embodiments, the accommodating groove includes a first accommodating groove and a second accommodating groove, where the tab connection member is formed with the first accommodating groove, at least a portion of the electrode connection member is inserted into the first accommodating groove, the electrode connection member is formed with the second accommodating groove, and at least a portion of the tab connection member is inserted into the second accommodating groove.

It should be understood that the electrode connection member is inserted into the first accommodating groove of the tab connection member, and the first accommodating groove can serve as a limiting function for the electrode connection member, thereby improving the connection stability between the electrode connection member and the tab connection member; and the tab connection member is inserted into the second accommodating groove of the electrode connection member, and the second accommodating groove can serve as a limiting function for the tab connection member, thereby improving the connection stability between the electrode connection member and the tab connection member. That is, the electrode connection member and the tab connection member can be limited to each other, thereby effectively improving the connection stability between the electrode connection member and the tab connection member and ensuring the structure stability of the connection structure.

In some embodiments, the electrode connection member includes a first connection segment connecting the tab connection member and a second connection segment connecting the first connection segment with the housing;
where one of the tab connection member and the first connection segment is formed with an accommodating groove, and another one of the tab connection member and the first connection segment is at least partially inserted into the accommodating groove.

It should be understood the accommodating groove may serve as a limiting function, so that one of the tab connection member and the first connection segment may limit another one of the tab connection member and the first connection segment, thereby improving the connection stability of the tab connection member and the first connection segment, and further improving the structure stability of the connection structure itself.

In some embodiments, the tab connection member includes a first tab connection member and a second tab connection member, where the first tab connection member connects the second tab connection member with the electrode connection member, and the second tab connection member is used to connect the tab; and
where one of the first tab connection member and the electrode connection member is formed with an accommodating groove, and at least a portion of another one of the first tab connection member and the electrode connection member is inserted into the accommodating groove.

It should be understood that the accommodating groove may serve as a limiting function, so that one of the first tab connection member and the electrode connection member may limit another one of the first tab connection member and the electrode connection member, thereby improving the connection stability of the first tab connection member and the electrode connection member, and further improving the structure stability of the connection structure itself.

In some embodiments, the connection structure further includes a package portion.

The package portion is provided at at least a portion of the connection member. A position of the electrode connection member where the package portion is provided can be prevented from contacting other substances (for example, an electrolyte) under the action of the package portion, so that the position of the electrode connection member where the package portion is provided is not easily corroded, the corrosion rate of the entire electrode connection member can be effectively delayed, the structure stability of the electrode connection member is improved, and the structure stability of the connection structure is further improved.

The package portion is provided at at least a portion of the tab connection member. A position of the tab connection member where the package portion is provided can be prevented from contacting other substances (for example, electrolytes) under the action of the package portion, so that the position of the tab connection member where the package portion is provided is not easily corroded, the corrosion rate of the entire tab connection member can be effectively delayed, the structure stability of the tab connection member is improved, and the structure stability of the connection structure is further improved.

The package portion is provided at the connection between the tab connection member and the electrode connection member. The connection between the tab connection member and the electrode connection member can be prevented from contacting other substances (for example, electrolytes) under the action of the package portion, so that the connection between the tab connection member and the electrode connection member is not easily corroded, the corrosion rate of the connection between the tab connection member and the electrode connection member can be effectively delayed, and the structure stability of the connection between the tab connection member and the electrode connection member is improved.

In some embodiments, the tab connection member is formed with an accommodating groove, the electrode connection member is inserted into the accommodating groove, a gap is provided between the electrode connection member and a side wall surface of the accommodating groove, and at least a portion of the package portion is provided in the gap.

It should be understood that at least a portion of the package portion is provided at the gap, so that the package portion can prevent other substances from appearing at the gap, and thus can prevent the connection between the electrode connection member and the tab connection member from contacting other substances. As such, the connection between the electrode connection member and the tab connection member is not easily corroded.

A groove depth of the accommodating groove is less than a thickness of the electrode connection member.

It should be understood that the tab connection member is formed with an accommodating groove, and the electrode connection member is inserted into the accommodating groove. The groove depth of the accommodating groove is less than the thickness of the electrode connection member, so that at least a portion of the electrode connection member may be protruded from the accommodating groove, thereby facilitating the connection of the electrode connection member to the housing.

In some embodiments, the electrode connection member is formed with an accommodating groove, the tab connection member is inserted into the accommodating groove, a gap is formed between the tab connection member and a side wall surface of the accommodating groove, and at least a portion of the package portion is provided in the gap.

It should be understood that at least a portion of the package portion is provided at the gap, so that the package portion can prevent other substances from appearing at the gap, and thus can prevent the connection between the electrode connection member and the tab connection member from contacting other substances. As such, the connection between the electrode connection member and the tab connection member is not easily corroded.

A groove depth of the accommodating groove is less than a thickness of the tab connection member.

It should be understood that the electrode connection member is formed with an accommodating groove, and the tab connection member is inserted into the accommodating groove. The groove depth of the accommodating groove is less than the thickness of the tab connection member, so that at least a portion of the tab connection member may be protruded from the accommodating groove, thereby facilitating the connection of the tab connection member to the tab.

In some embodiments, the package portion is provided at a notch of the accommodating groove.

It should be understood that, when the electrode connection member is provided within the accommodating groove of the tab connection member, and by providing the package portion connected to the electrode connection member at the notch of the accommodating groove, the package portion can package and isolate a position between the electrode connection member and the notch of the accommodating groove. As such, the contact position between the electrode connection member and the notch of the accommodating groove does not contact other substances, and other substances do not enter the accommodating groove, thereby effectively preventing corrosion of the connection between the electrode connection member and the tab connection member.

When the tab connection member is provided within the accommodating groove of the electrode connection member, and by providing the package portion connected to the tab connection member at the notch of the accommodating groove, the package portion can package and isolate a position between the tab connection member and the notch of the accommodating groove. As such, the contact position between the tab connection member and the notch of the accommodating groove does not contact other substances, and other substances do not enter the accommodating groove, thereby effectively preventing corrosion of the connection between the electrode connection member and the tab connection member.

In some embodiments, the connection member includes:
an electrode connection member adapted to be connected to an inner bottom wall of the housing of the battery; and
a tab connection member connected to the electrode connection member and adapted to be connected with a negative tab of the battery;
where at least a portion of the electrode connection member is protruded from the tab connection member.

According to the connection structure of the embodiments of the invention, when the connection structure is used to connect the inner bottom wall of the housing of the battery with the negative tab, the connection structure is provided between the inner bottom wall of the housing and the negative tab, and the tab connection member can be connected to the negative tab. Since at least a portion of the electrode connection member is protruded from the tab connection member, the electrode connection member can be protruded toward the inner bottom wall of the housing, so that the electrode connection member can be connected to the inner bottom wall of the housing, thereby improving the convenience of connection between the housing and the tab.

It should be understood that the electrode connection member is protruded from the tab connection member, so that the electrode connection member can be directly connected to the inner bottom wall of the housing, simplifying the connection structure.

In some embodiments, the tab connection member is provided with a mounting groove into which the electrode connection member is inserted.

It should be understood that the mounting groove may serve as a limiting function for the electrode connection member to improve the connection stability between the electrode connection member and the tab connection member.

In some embodiments, a mounting space is formed between the electrode connection member and the side wall of the mounting groove and used to mount the package portion.

It should be understood that the electrode connection member is spaced apart from the side wall of the mounting groove at intervals, so that the mounting space for mounting the package portion can be formed between the electrode connection member and the side wall of the mounting groove, and the package portion is further provided at the connection between the electrode connection member and the tab connection member, so as to improve the corrosion resistance of the connection between the electrode connection member and the tab connection member using the package portion.

In some embodiments, the package portion is provided at the notch of the mounting groove.

It should be understood that the electrode connection member is provided within the mounting groove of the tab connection member, and by providing the package portion connected to the electrode connection member at the notch of the mounting groove, the package portion can package and isolate a position between the electrode connection member and the notch of the mounting groove. As such, the contact position between the electrode connection member and the notch of the mounting groove does not contact other substances, and other substances do not enter the mounting groove, thereby effectively preventing corrosion of the connection between the electrode connection member and the tab connection member.

In some embodiments, the electrode connection member includes a bottom wall connection portion, a middle portion, and a fixing portion connected in sequence, where the bottom wall connection portion is adapted to be connected to the inner bottom wall of the housing of the battery, and the fixing portion is fixedly connected to the tab connection member.

It should be understood that the tab connection member, the fixing portion, the middle portion, and the bottom wall connection portion are connected in sequence, so that the electrode connection member connects the housing with the tab connection member, thereby realizing the connection of the housing to the tab.

In some embodiments, the middle portion is disposed obliquely relative to the bottom wall connection portion and/or the fixing portion.

It should be understood that the middle portion is disposed obliquely, so that the middle portion is connected to the bottom wall connection portion and the fixing portion, while the overall height of the electrode connection member can be reduced, thereby reducing the height of the entire connection structure and facilitating the miniaturization design of the battery.

In some embodiments, a package portion is provided at the connection between the bottom wall connection portion and the middle portion.

It should be understood that the package portion can protect and prevent the connection between the bottom wall connection portion and the middle portion from contacting other substances (e.g., electrolytes), thereby effectively preventing corrosion of the connection between the bottom wall connection portion and the middle portion, and improving the connection stability between the bottom wall connection portion and the middle portion.

In some embodiments, a package portion is provided at the connection between the middle portion and the fixing portion.

It should be understood that the package portion can protect and prevent the connection between the middle portion and the fixing portion from contacting other substances (e.g., electrolytes), thereby effectively preventing corrosion of the connection between the middle portion and the fixing portion, and improving the connection stability between the middle portion and the fixing portion.

In some embodiments, a central axis of the electrode connection member coincides with a central axis of the connection structure.

It should be understood that the electrode connection member is located at a middle position of the connection structure, so that the electrode connection member is disposed opposite to the inner bottom wall of the housing to facilitate connection of the electrode connection member to the inner bottom wall of the housing.

According to embodiments of the second aspect of the invention, referring to FIG. 1, a battery includes a housing, an electrode assembly, and the connection structure as described in the above embodiments, where the housing is formed with a mounting cavity, the electrode assembly is mounted in the mounting cavity, and the connection structure is located between the electrode assembly and an inner bottom wall of the housing.

It should be understood that, when the connection structure is used to connect the inner bottom wall of the housing of the battery with the negative tab, the connection structure is provided between the electrode assembly and the inner bottom wall of the housing, and the tab connection member can be connected to the negative tab. Since at least a portion of the electrode connection member is protruded from the tab connection member, the electrode connection member can be protruded toward the inner bottom wall of the housing, so that the electrode connection member can be connected to the inner bottom wall of the housing, thereby improving the convenience of connection between the housing and the tab. The electrode connection member is protruded from the tab connection member, so that the electrode connection member can be directly connected to the inner bottom wall of the housing, simplifying the connection structure.

In some embodiments, the tab connection member is spaced apart from the side wall surface of the housing at intervals to avoid direct contact of the tab connection member with the side wall surface of the housing, reduce a contact point between the connection structure and the housing, and avoid corrosion caused by the contact between the tab connection member and the housing.

In some embodiments, a package portion is provided at the connection between the electrode connection member and the inner bottom wall the housing.

It should be understood that the package portion can protect and prevent the connection between the electrode connection member and the inner bottom wall of the housing from contacting other substances (e.g., electrolytes), thereby effectively preventing corrosion of the connection between the electrode connection member and the inner bottom wall of the housing, and improving the connection stability between the electrode connection member and the inner bottom wall of the housing.

In some embodiments, the battery includes:
a housing; and
a connection member and a package portion, where the connection member is used to connect the housing with a tab;
where an accommodating space is provided at the connection member or provided between the connection member and the housing, and used to accommodate the package portion.

According to the battery of embodiments of the invention, by providing the accommodating space for accommodating the package portion at the connection member so as to facilitate the provision of the package portion at the connection member, a position of the connection member where the package portion is provided may be prevented from contacting other substances, the position of the connection member where the package portion is provided is not easily corroded, the corrosion speed of the entire connection member can be effectively delayed, the structure stability of the connection member is improved, and the connection stability between the housing and the tab is further improved. By providing the accommodating space for accommodating the package portion at the connection between the connection member and the housing so as to facilitate the provision of the package portion at the connection between the connection member and the housing, the package portion may prevent the connection between the connection member and the housing from contacting other substances, so that the connection between the connection member and the housing is not easily corroded, the stability of connection of the connection member with the housing is improved, and the connection stability between the housing and the tab is further improved.

It should be understood that the accommodating space is used to accommodate the package portion, that is, the package portion can be filled in the accommodating space, thereby facilitating the arrangement and molding of the package portion. Moreover, when the package portion is in a fluid state before molding of the package portion, the amount of the package portion can be ensured by the provision of the accommodating space, and it is avoided that the amount of the package portion is too small to effectively prevent corrosion.

In some embodiments, the connection member includes an electrode connection member connected to the housing and a tab connection member connected to the tab.

It should be understood that the electrode connection member is connected to the housing and the tab connection member is connected to the tab, so that the connection member can connect the tab with the housing together.

The electrode connection member is formed with an accommodating space.

It should be understood that, by providing the accommodating space for accommodating the package portion at the electrode connection member so as to facilitate provision of the package portion at the electrode connection portion, a position of the electrode connection member where the package portion is provided can be prevented from contacting other substances, so that the position of the electrode connection member where the package portion is provided is not easily corroded, the corrosion rate of the entire electrode connection member can be effectively delayed, and the structure stability of the electrode connection member is improved.

The tab connection member is formed with an accommodating space.

It should be understood that, by providing the accommodating space for accommodating the package portion at the tab connection member so as to facilitate provision of the package portion at the tab connection portion, a position of the tab connection member where the package portion is provided can be prevented from contacting other substances, so that the position of the tab connection member where the package portion is provided is not easily corroded, the corrosion rate of the entire tab connection member can be effectively delayed, and the structure stability of the tab connection member is improved.

An accommodating space is formed between the electrode connection member and the tab connection member.

**It** should be understood that, by providing the accommodating space for accommodating the package portion between the electrode connection member and the tab connection member so as to facilitate the provision of the package portion between the electrode connection member and the tab connection member, the connection between the electrode connection member and the tab connection member can be prevented from contacting other substances, so that the connection between the electrode connection member and the tab connection member is not easily corroded, the corrosion rate of the connection between the electrode connection member and the tab connection member can be effectively delayed, and the stability of connection the electrode connection member with the tab connection member is improved.

An accommodating space is formed between the electrode connection member and the housing.

It should be understood that, by providing the accommodating space for accommodating the package portion between the electrode connection member and the housing so as to facilitate provision of the package portion between the electrode connection member and the housing, a position of the connection between the electrode connection member and the housing can be prevented from contacting other substances, so that the position of the connection between the electrode connection member and the housing is not easily corroded, the corrosion rate of the connection between the electrode connection member and the housing can be effectively delayed, and the stability of connection of the electrode connection member with the housing is improved.

An accommodating space is formed between the tab connection member and the housing.

It should be understood that the package portion may separate the tab connection member from the housing, prevent the tab connection member from directly contacting the housing, and prevent corrosion of the connection between the tab connection member and the housing caused by the contact between the tab connection member and the housing.

In some embodiments, the electrode connection member includes a first connection segment connected to the tab connection member and a second connection segment connected to both the first connection segment and the housing.

The first tab connection member is formed with an accommodating space.

**It** should be understood that, by providing the accommodating space for accommodating the package portion at the first tab connection member so as to facilitate provision of the package portion at the first tab connection portion, a position of the first tab connection member where the package portion is provided can be prevented from contacting other substances, so that the position of the first tab connection member where the package portion is provided is not easily corroded, the corrosion rate of the entire first tab connection member can be effectively delayed, and the structure stability of the first tab connection member is improved.

The second tab connection member is formed with an accommodating space.

It should be understood that, by providing the accommodating space for accommodating the package portion at the second tab connection member so as to facilitate provision of the package portion at the second tab connection portion, a position of the second tab connection member where the package portion is provided can be prevented from contacting other substances, so that the position of the second tab connection member where the package portion is provided is not easily corroded, the corrosion rate of the entire second tab connection member can be effectively delayed, and the structure stability of the second tab connection member is improved.

An accommodating space is formed between the first tab connection member and the second tab connection member.

It should be understood that, by providing the accommodating space for accommodating the package portion between the first tab connection member and the second tab connection member so as to facilitate provision of the package portion between the first tab connection member and the second tab connection member, the connection between the first tab connection member and the second tab connection member can be prevented from contacting other substances, so that the connection between the first tab connection member and the second tab connection member is not easily corroded, the corrosion rate of the connection between the first tab connection member and the second tab connection member can be effectively delayed, and the stability of connection of the first tab connection member with the second tab connection member is improved.

An accommodating space is formed between the first tab connection member and the electrode connection member.

It should be understood that, by providing the accommodating space for accommodating the package portion between the first tab connection member and the electrode connection member so as to facilitate provision of the package portion between the first tab connection member and the electrode connection member, the connection between the first tab connection member and the electrode connection member can be prevented from contacting other substances, so that the connection between the first tab connection member and the electrode connection member is not easily corroded, the corrosion rate of the connection between the first tab connection member and the electrode connection member can be effectively delayed, and the stability of connection of the first tab connection member with the electrode connection member is improved.

An accommodating space is formed between the second tab connection member and the housing.

It should be understood that by providing the accommodating space for accommodating the package portion between the second tab connection member and the housing so as to facilitate provision of the package portion between the second tab connection member and the housing, the package portion may separate the second tab connection member from the housing, prevent the second tab connection member from directly contacting the housing, reduce a contact point between the connection member and the housing, and prevent corrosion of a contact position between the second tab connection member and the housing caused by the direct contact between the second tab connection member and the housing.

In some embodiments, the accommodating space includes an accommodating groove formed in the connection member.

It should be understood that the connection member is formed with the accommodating groove having the accommodating space. That is, the accommodating groove is used to accommodate the package portion and can limit the package portion, thereby facilitating the arrangement and molding of the package portion.

In some embodiments, the connection member includes at least two connection portions connected in sequence, and the connection between two adjacent ones of the connection portions is provided with an accommodating groove.

It should be understood that, by providing the accommodating grooves for accommodating the package portion at the connection between the two connection portions so as to facilitate provision of the package portion at the connection between the two connection portions, the package portion is used to effectively isolate the connection between two adjacent connection portions, thereby preventing corrosion of the connection between the two adjacent connection portions and improving the connection stability of the two adjacent connection portions.

In some embodiments, the connection member is formed with a projection formed with an accommodating groove.

It should be understood that the connection member is firstly provided with the projection, and the projection is then formed with the accommodating groove for accommodating the package portion, so that the package portion can be provided at the connection member while further reducing the influence on the overall thickness of the connection member and avoiding the influence on the structure strength of the connection member due to the reduced thickness of the connection member.

In some embodiments, an end of the connection member connected to the housing is formed with a notch, and a wall surface of the notch and a side wall surface of the housing enclose an accommodating space.

It should be understood that the notch is formed at the end of the connection connected to the housing, and the notch is disposed opposite to the side wall surface of the housing, so that the wall surface of the notch and the side wall surface of the housing can enclose the accommodation space for accommodating the package portion, thereby facilitating the provision of the package portion at the connection between the connection member and the housing.

In some embodiments, the battery further includes a first enclosure mounted to the connection member, where two ends of the first enclosure abut against the side wall surface of the housing, so that the first enclosure and the side wall surface of the housing enclose an accommodating space.

It should be understood that the first enclosure is provided at an end of the connection member connected to the housing, and when the connection member is connected to the housing, two ends of the first enclosure abut against the side wall surface of the housing, so that the first enclosure and the side wall surface of the housing can enclose the accommodation space for accommodating the package portion, thereby facilitating the provision of the package portion at the connection between the connection member and the housing.

In some embodiments, the connection member includes at least two connection portions connected in sequence, and the battery further includes a second enclosure, where the second enclosure is mounted to one of two adjacent connection portions, and two ends of the second enclosure abut against another one of the two adjacent connection portions, so that the second enclosure and the another one of the two adjacent connection portions enclose an accommodating space.

It should be understood that the second enclosure provided at the one of the two adjacent connection portions can abut against the another one of the two adjacent connection portions, so as to enclose an accommodation space for accommodating the package portion, thereby facilitating the provision of the package portion at the connection between the two adjacent connection portions.

In some embodiments, the battery includes:
a housing;
a connection member for connecting the housing with a tab; and
a mounting bracket fixed in the housing, where the connection member is mounted to the mounting bracket.

According to the battery of the embodiments of the invention, the connection member connects the housing with the tab, so that the battery can operate normally. The connection member is mounted to the mounting bracket and the mounting bracket is used to fix the connection member, thereby improving the stability of the connection member, improving the stability for the connection member to connect the housing with the tab, and further ensuring the stability of the battery.

In some examples, the mounting bracket is fixedly connected to the housing or fixed onto an electrode assembly mounted in the housing.

In some embodiments, at least a portion of the connection member is protruded from the mounting bracket.

It should be understood that the connection member protruded from the mounting bracket may be connected to the housing or the tab, so that the connection member connects the housing with the tab, which can reduce the influence of the mounting bracket on the connection housing and the tab and ensure that the connection member can connect the housing with the tab.

In some embodiments, the connection member includes an electrode connection member connected to the housing and a tab connection member connected to the tab, where the tab connection member is mounted to the mounting bracket, and at least a portion of the electrode connection member is protruded from the mounting bracket.

It should be understood that the electrode connection member can be connected to the tab connection member at the mounting bracket, while the electrode connection member protruded from the mounting bracket can be connected to the housing, so that the connection member can connect the housing with the tab and avoid the influence of the mounting bracket on the connection housing and the tab.

In some embodiments, the mounting bracket is formed with a connection notch, a first end of the electrode connection member is connected to the tab connection member, a second end of the electrode connection member is connected to the housing through the connection notch, and the second end of the electrode connection member and the tab connection member are respectively located on both sides of the mounting bracket.

It should be understood that the tab connection member is provided at one side of the mounting bracket, and the first end of the electrode connection member is connected to the tab connection member. The second end of the electrode connection member may extend away from the tab connection member through the connection notch, that is, the second end of the electrode connection member may be provided through the connection notch, so that the second end of the electrode connection portion is located at another side of the mounting bracket, a side of the tab connection member at the mounting bracket may be connected to the tab, and another side of the second end of the electrode connection member at the mounting bracket may be connected to the housing, thereby facilitating the connection member to connect the housing with the tab.

In some embodiments, the tab connection member, the wall surface of the connection notch, and the electrode connection member enclose a package cavity for accommodating the package portion.

It should be understood that the second end of the electrode connection member extends from the connection notch and the tab connection member is mounted to the mounting bracket. A package cavity is enclosed by using the tab connection member, the wall surface of the connection notch, and the electrode connection member, the tab connection member can be used as a bottom wall of the package cavity, and the electrode connection member and the wall surface of the connection notch can be used as a side wall of the package cavity, so that the package cavity can be used for accommodating the package portion, thereby facilitating the arrangement of the package portion.

It should be understood that by providing the package portion in the package cavity, the package portion can cover the connection between the electrode connection member and the tab connection member, thereby effectively improving the corrosion resistance of the connection between the electrode connection member and the tab connection member.

In some embodiments, the battery further includes an electrode assembly, where the housing is formed with a mounting cavity, and the electrode assembly is mounted within the mounting cavity; and
where the housing is formed with an inward retracted portion, the inward retracted portion is protruded into the mounting cavity, the mounting bracket is positioned between the inward retracted portion and the electrode assembly, and the connection member connects the inward retracted portion with a positive tab of the electrode assembly.

It should be understood that the mounting bracket is disposed between the inward retracted portion and the electrode assembly to facilitate the connection member to connect the inward retracted portion with the positive tab of the electrode assembly, so that the connection member can connect the housing with the tab.

The tab connection member is connected to a side of the mounting bracket away from the inward retracted portion.

It should be understood that the mounting bracket is located between the inward retracted portion and the electrode assembly, that is, the mounting bracket is located between the inward retracted portion and the positive tab of the electrode assembly. Therefore, the tab connection member is connected to the side of the mounting bracket away from the inward retracted portion, so that the tab connection member is disposed opposite to the positive tab of the electrode assembly, thereby facilitating the connection of the tab connection member with the positive tab.

In some embodiments, the battery further includes an electrode assembly, where the housing is formed with a mounting cavity, and the electrode assembly is mounted within the mounting cavity; and
where the connection member is positioned between the electrode assembly and an inner bottom wall of the housing, and the connection member connects a negative tab of the electrode assembly with the inner bottom wall of the housing.

It should be understood that the mounting bracket is disposed between the electrode assembly and the inner bottom wall to facilitate the connection member to connect the negative tab with the inner bottom wall of the housing, so that the connection member can connect the housing with the negative tab.

The tab connection member is connected to a side of the mounting bracket away from an inner bottom wall of the housing.

It should be understood that the mounting bracket is positioned between the electrode assembly and the inner bottom wall of the housing, that is, the mounting bracket is positioned between the negative tab and the inner bottom wall of the housing. Therefore, the tab connection member is connected to the side of the mounting bracket away from the inner bottom wall of the housing, so that the tab connection member is disposed opposite to the negative tab of the electrode assembly, thereby facilitating the connection of the tab connection member with the negative tab.

In some embodiments, the mounting bracket is fixedly connected to the housing.

It should be understood that the mounting bracket is fixedly connected to the housing, so that the mounting bracket remains fixed and, in turn, the connection member connected to the mounting bracket may remain stable.

In some examples, the mounting bracket may be fixedly mounted to the electrode assembly or any other suitable position in addition to being fixedly connected to the housing.

The connection member includes an electrode connection member connected to the housing and a tab connection member connected to the tab, where a portion of the mounting bracket connected to the housing is made of a metal, and a portion of the mounting bracket in contact with the tab connection member is made of an insulating material.

It should be understood that the portion of the mounting bracket connected to the housing is provided as the metal material to facilitate the connection of the mounting bracket to the housing. When the portion of the mounting bracket in contact with the tab connection member is provided as the insulating material, it is possible to prevent the tab connection member from being electrically connected to the housing through the mounting bracket.

The mounting bracket is made of the metal material, and the battery further includes an insulating portion provided between the tab connection member and the mounting bracket.

It should be understood that the mounting bracket is the metal material to facilitate the connection of the mounting bracket to the housing. Meanwhile, the insulating portion is provided between the tab connection member and the mounting bracket, and the insulating portion is used to insulate the tab connection member from the mounting bracket, so that the tab connection member is prevented from being electrically connected to the housing through the mounting bracket.

In some embodiments, the package portion is provided at the connection between the mounting bracket and the housing.

It should be understood that by providing the package portion at the connection between the mounting bracket and the housing, the package portion can prevent the connection between the mounting bracket and the housing from contacting other substances (such as, electrolytes), thereby effectively avoiding corrosion of the connection between the mounting bracket and the housing, and improving the connection stability between the mounting bracket and the housing.

In some embodiments, the battery includes:
a housing;
a connection member for connecting the housing with a tab; and
a cover plate connected to the housing and abutting against the connection member.

According to the battery of the embodiments of the invention, the connection member connects the housing with the tab, so that the battery can operate normally while the connection member is charged. By enabling the connection member to abut against the cover plate, the cover plate is also charged, so that corrosion of the cover plate can be effectively prevented, the service life of the cover plate is prolonged, and the stability of the battery is improved.

In some embodiments, the battery further includes a conductive protrusion electrically connected to the cover plate.

It should be understood that the cover plate is located at an end portion of the battery and the conductive protrusion is provided at the connection member, so that the conductive protrusion is protruded toward one side of the cover plate and the connection member is electrically connected to the cover plate through the conductive protrusion, thereby charging the cover plate and preventing corrosion of the cover plate.

In some embodiments, the package portion is provided at the connection between the conductive protrusion and the cover plate.

It should be understood that the package portion can serve as an isolation function for the connection between the conductive protrusion and the cover plate, and prevent the connection between the conductive protrusion and the cover plate from contacting other substances, so that the connection between the conductive protrusion and the cover plate is not easily corroded so as to improve the connection stability between the conductive protrusion and the cover plate and enable the cover plate to maintain a charged state.

In some embodiments, the conductive protrusion includes a first conductive connection portion, a second conductive connection portion, and a third conductive connection portion, where the first conductive connection portion connects a first end of the second conductive connection portion with the connection member, the second conductive connection portion abuts against the cover plate, and the third conductive connection portion connects a second end of the second conductive connection portion with the connection member.

It should be understood that the second conductive connection portion abuts against the cover plate, and the second conductive connection portion is connected to the connection member by the first conductive connection portion and the third conductive connection portion, so that the second conductive connection portion can be charged, and the cover plate can be charged, thereby improving the corrosion resistance effect of the cover plate.

It should be understood that the first conductive portion and the third conductive portion may function to support the second conductive portion, so that the second conductive portion abuts with the cover plate more stably.

In some embodiments, the first conductive portion and the third conductive portion are arranged obliquely relative to the second conductive portion.

It should be understood that the oblique arrangement of the first conductive portion and the third conductive portion can reduce the distance between the second conductive portion and the connection member and the overall height of the conductive protrusion and the connection member, which is conductive to miniaturization of the battery.

In some embodiments, oblique directions of the first conductive portion and the third conductive portion are different from each other.

It should be understood that the first conductive portion, the second conductive portion, the third conductive portion, and the connection member may enclose a trapezoidal structure, thereby improving the structure stability of the conductive protrusion.

In some embodiments, the package portion is provided at the connection between the first conductive portion and the second conductive portion.

It should be understood that, by providing the package portion at the connection between the first conductive portion and the second conductive portion, the package portion can prevent the connection between the first conductive portion and the second conductive portion from contacting other substances, so that the connection between the first conductive portion and the second conductive portion is not easily corroded, thereby improving the connection stability between the first conductive portion and the second conductive portion.

In some embodiments, the package portion is provided at the connection between the second connection portion and the third connection portion.

It should be understood that, by providing the package portion at the connection between the second conductive portion and the third conductive portion, the package portion can prevent the connection between the second conductive portion and the third conductive portion from contacting other substances, so that the connection between the second conductive portion and the third conductive portion is not easily corroded, thereby improving the connection stability between the second conductive portion and the third conductive portion.

In some embodiments, the package portion is provided at the connection between the first conductive portion and the connection member.

It should be understood that, by providing the package portion at the connection between the first conductive portion and the connection member, the package portion may prevent the connection between the first conductive portion and the connection member from contacting other substances, so that the connection between the first conductive portion and the connection member is not easily corroded, thereby improving the connection stability between the first conductive portion and the connection member.

In some embodiments, the package portion is provided at the connection between the third conductive portion and the connection member.

It should be understood that, by providing the package portion at the connection between the third conductive portion and the connection member, the package portion can prevent the connection between the third conductive portion and the connection member from contacting other substances, so that the connection between the third conductive portion and the connection member is not easily corroded, thereby improving the connection stability between the third conductive portion and the connection member.

In some embodiments, the conductive protrusion is made of the same material as the cover plate and fixedly connected to the cover plate by welding.

It should be understood that, when the conductive protrusion is made of the same material as the cover plate, the conductive protrusion and the cover plate can be directly fixedly connected together by welding, thereby improving the stability and the sealability of connection of the conductive protrusion with the cover plate.

In some embodiments, the conductive protrusion is made of a different material from the cover plate and connected to the cover plate by at least one of a snap-in, a threaded connection, and an interference fit.

It should be understood that, when the conductive protrusion is made of the different material from the cover plate, it is difficult to fixedly connect the conductive protrusion with the cover plate together by welding. Therefore, in the present embodiment, the conductive protrusion is connected to the cover plate together by at least one of a snap-in, a threaded connection, and an interference fit.

In some embodiments, the connection member includes an electrode connection member connected to the housing and a tab connection member connected to the tab, where the package portion is provided at the electrode connection member and/or the tab connection member.

It should be understood that the electrode connection member is connected to the housing and the tab connection member is connected to the tab, so that the electrode connection member and the tab connection member can connect the housing with the tab.

It should be understood that, by providing the package portion at the electrode connection member, the package portion may be located at the connection member, at the connection between the electrode connection member and the tab connection member, or at the connection of the electrode connection member and the housing. That is, the package portion can improve the corrosion resistance of the electrode connection member, can improve the corrosion resistance of the connection between the electrode connection member and the tab connection member to enable the connection between the electrode connection member and the tab connection member to be more stable, and can also improve the corrosion resistance of the connection between the electrode connection member and the housing to enable the connection between the electrode connection member and the housing to be more stable.

In some embodiments, the conductive protrusion is connected to the tab connection member and protruded from the tab connection member.

It should be understood that the conductive protrusion is protruded toward one side of the cover plate so as to facilitate connection of the conductive protrusion to the cover plate.

In some embodiments, the package portion is provided at the connection between the conductive protrusion and the tab connection member.

It should be understood that the package portion can improve the corrosion resistance of the connection between the conductive protrusion and the tab connection member to enable connection of the conductive protrusion to the tab connection member to be more stable.

In some embodiments, the battery further includes a seal member provided at the connection between the cover plate and the housing.

It should be understood that the seal member is provided at the connection between the cover plate and the housing and can improve the sealing performance of connection of the cover plate to the housing.

According to embodiments of a second aspect of the invention, an electrical device includes the battery as described above.

According to the electrical device provided in the embodiments of the invention, by providing the package portion 3 at the connection between the electrode lead-out portion 201 and the tab connection portion 202, the package portion 3 can prevent an impurity from entering the connection between the electrode lead-out portion 201 and the tab connection portion 202, thereby preventing the impurity from affecting a connection strength between the electrode lead-out portion 201 and the tab connection portion 202, improving a connection stability between the electrode lead-out portion 201 and the tab connection portion 202, improving a structural stability of the connection member 2, and further improving a connection stability between the tab of the battery and the electrode of the battery. By providing the package portion 3 at the connection between the electrode lead-out portion 201 and the electrode, the package portion 3 prevents the impurity from entering the connection between the electrode lead-out portion 201 and the electrode, thereby preventing the impurity from affecting a connection strength between the electrode lead-out portion 201 and the electrode, improving a connection stability between the electrode lead-out portion 201 and the electrode, and further improving a connection stability between the electrode tab of the battery and the electrode of the battery and improving the stability of the battery and the electrical device.

It should be noted that the electrical device may be a vehicle, an aircraft, or a household appliance. It should be noted that the foregoing is merely an illustration of the electric device, and does not specifically limit the electric device.

## Claims

1. A battery, comprising: a connection member (2) and a package portion (3), wherein the connection member (2) has an electrode lead-out portion (201) for connecting an electrode of the battery and a tab connection portion (202) for connecting a tab of the battery; and
wherein at least a partial structure of the package portion (3) is provided at a connection between the electrode lead-out portion (201) and the tab connection portion (202), and/or a connection between the electrode lead-out portion (201) and the electrode of the battery.

2. The battery of claim 1, wherein the connection member (2) comprises an electrode connection member (22) having the electrode lead-out portion (201) and a tab connection member (23) having the tab connection portion (202), the electrode connection member (22) being connected with the tab connection member (23) in sequence.

3. The battery of claim 2, wherein:
the package portion (3) is provided at the connection between the electrode connection member (22) and the electrode of the battery; and/or
the package portion (3) is provided at the connection between the electrode connection member (22) and the tab connection member (23); and/or
the electrode connection member (22) and the tab connection member (23) are in contact with the package portion (3) at the same time; and/or
the electrode connection member (22) and the electrode of the battery are in contact with the package portion (3) at the same time.

4. The battery of claim 2 or 3, wherein the battery comprises a housing (1) and the package portion (3) is provided at a connection between the electrode connection member (22) and the housing (1), and the package portion (3) extends to and abuts against a side wall surface of the housing (1).

5. The battery of claim 4, wherein: the electrode connection member (22) comprises first and second side surfaces (221; 222) that are oppositely disposed, wherein the first side surface (221) is connected to the housing (1) and the tab connection member (23) is connection to the second side surface (222).

6. The battery of any one of claims 2-5, wherein a first end of the electrode connection member (22) is connected to the tab connection member (23), a second end of the electrode connection member (22) is protruded from the tab connection member (23), and an accommodating space (24) for accommodating the package portion (3) is formed between the second end of the electrode connection member (22) and the tab connection member (23) and/or between the first end of the electrode connection member (22) and the tab connection member (23).

7. The battery of any one of claims 4-5, wherein: the electrode connection member (22) comprises a first connection segment (223) and a second connection segment (224), wherein the second connection segment (224) connects the first connection segment (223) with the housing (1), a second end of the first connection segment (223) is protruded or bent away from the tab connection member (23) relative to a first end of the first connection segment (223);
wherein an accommodating space (24) is formed between the first end of the first connection segment (223) and the tab connection member (23), and/or between the second end of the first connection segment (223) and the tab connection member (23);
wherein the package portion (3) is provided at connection between the first connection segment (223) and the second connection segment (224); or the package portion (3) is provided at at least a portion of the first connection segment (223); or the package portion (3) is provided at at least a portion of the second connection segment (224); or the package portion (3) is provided between the second connection segment (224) and the housing (1);
wherein the electrode connection member (22) further comprises a third connection segment (225) connecting the first connection segment (223) with the second connection segment (224); and
wherein the package portion (3) is provided at connection between the third connection segment (225) and the first connection segment (223); or the package portion (3) is provided at connection between the third connection segment (225) and the second connection segment (224); or the package portion (3) is provided at at least a portion of the third connection segment (225).

8. The battery of any one of claims 4-5, and 7, wherein the tab connection member (23) comprises a first tab connection member (231) and a second tab connection member (232), wherein the first tab connection member (231) is connected to an end portion of the second tab connection member (232), the second tab connection member (232) is connected to the tab, and the electrode connection member (22) is connected to a side of the first tab connection member (231) away from the second tab connection member (232).

9. The battery of claim 8, wherein:
a height of the electrode connection member (22) is less than a height of the first tab connection member (231) along an axial direction of the housing (1),
the package portion (3) is provided between a first end of the first tab connection member (231) and a first end of the electrode connection member (22); and/or,
a package space (233) for accommodating the package portion (3) is formed between a second end of the first tab connection member (231) and a second end of the electrode connection member (22).

10. The battery of any one of claims 8 or 9, wherein:
along a radial direction of the housing (1), an orthographic projection of the first tab connection member (231) on a side wall surface of the housing (1) at least partially overlaps an orthographic projection of the electrode connection member (22) on the side wall surface of the housing (1); or
along the radial direction of the housing (1), an orthographic projection of the electrode connection member (22) on the side wall surface of the housing (1) is located within the orthographic projection of the first tab connection member (231) on the side wall surface of the housing (1);
wherein an accommodating groove (234) is formed on a side of the first tab connection member (231) adjacent to a side wall of the housing (1), one portion of the electrode connection member (22) is located in the accommodating groove (234), and another portion of the electrode connection member (22) is protruded from the accommodating groove (234) and connected to the housing (1);
wherein a gap is provided between the electrode lead-out portion (201) and a side wall surface of the accommodating groove (234), and at least a portion of the package portion (3) is provided in the gap; and/or the package portion (3) is provided between the electrode connection member (22) and a side wall surface of the tab connection member (23) toward the side wall of the housing (1); and
wherein the package portion (3) is provided on a side of the first tab connection member (231) adjacent to a center of the housing (1).

11. The battery of any one of claims 1-10, wherein the package portion (3) is a package glue or a thermoplastic film; and/or
wherein the package portion (3) has an irregular shape.

12. The battery of any one of claims 1-11, wherein a thickness of the package portion (3) is equal along an axial direction of the battery or along a radial direction of the battery; or
wherein the thickness of the package portion (3) is unequal along the axial direction of the battery or along the radial direction of the battery; or
wherein the thickness of the package portion (3) is between 1 mm and 2 mm along the axial direction of the battery or along the radial direction of the battery.

13. The battery of any one of claims 1-12, wherein:
the package portion (3) comprises a package layer (31) and an insulating protective layer (32);
the package layer (31) is provided at the connection between the electrode lead-out portion (201) and the tab connection portion (202), and the package layer (31) is located at one side of the package layer (31) away from the connection between the electrode lead-out portion (201) and the tab connection portion (202); or
the package layer (31) is provided at the connection between the electrode lead-out portion (201) and the electrode of the battery, and the insulating protective layer (32) is connected to one side of the package layer (31) away from the connection between the electrode lead-out portion (201) and the electrode.

14. The battery of any one of claims 4-5, and 7-10, wherein the package portion (3) is protruded from the connection between the electrode lead-out portion (201) and the tab connection portion (202);
wherein, along an axial direction of the housing (1), a length of the package portion (3) protruded from the connection between the electrode lead-out portion (201) and the tab connection portion (202) is between 0 mm and 4 mm;
wherein the package portion (3) is protruded from the connection between the electrode lead-out portion (201) and the electrode of the battery; and
wherein, along the axial direction of the housing (1), a length of the package portion (3) protruded from the connection between the electrode lead-out portion (201) and the electrode of the battery is between 0 mm and 4 mm.

15. An electrical device, comprising the battery of any one of claims 1-14.
